(19) Europäisches Patentamt
European Patent Office
Office européen des brevets

(11) EP 1 375 585 B1

(12) **EUROPEAN PATENT SPECIFICATION**

(45) Date of publication and mention of the grant of the patent:
**21.12.2005 Bulletin 2005/51**

(21) Application number: **02708707.1**

(22) Date of filing: **28.03.2002**

(51) Int Cl.[7]: **C08L 23/10**, C08L 53/00, C08F 255/00, C08F 210/16, C08L 23/00, C08F 210/06

(86) International application number:
**PCT/JP2002/003076**

(87) International publication number:
**WO 2002/079322 (10.10.2002 Gazette 2002/41)**

(54) **PROPYLENE POLYMER COMPOSITION, MOLDED OBJECT, AND POLYOLEFIN COPOLYMER**

PROPYLENPOLYMERZUSAMMENSETZUNG, FORMKÖRPER UND POLYOLEFINCOPOLYMER

COMPOSITION DE POLYMERE DE PROPYLENE, OBJET MOULE ET COPOLYMERE DE POLYOLEFINE

(84) Designated Contracting States:
**DE GB**

(30) Priority: **29.03.2001 JP 2001094830**
**29.03.2001 JP 2001094831**

(43) Date of publication of application:
**02.01.2004 Bulletin 2004/01**

(73) Proprietor: **IDEMITSU KOSAN CO., LTD.**
**Tokyo 100-8321 (JP)**

(72) Inventors:
- **GOTO, Yasuhiro**
**Ichihara-shi, Chiba 299-0107 (JP)**
- **NAKAGAWA, Masaru**
**Ichihara-shi, Chiba 299-0107 (JP)**
- **TATSUMI, Tomio**
**Ichihara-shi, Chiba 299-0107 (JP)**
- **MACHIDA, Shuji**
**Ichihara-shi, Chiba 299-0107 (JP)**

(74) Representative:
**Gille Hrabal Struck Neidlein Prop Roos**
**Patentanwälte**
**Brucknerstrasse 20**
**40593 Düsseldorf (DE)**

(56) References cited:
**EP-A- 0 546 191**
**EP-A1- 0 831 125**
**JP-A- 62 064 814**
**EP-A- 1 086 986**
**EP-A1- 1 162 213**
**JP-A- 2001 011 259**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

### Technical Filed

The present invention relates to a propylene polymer composition, a molded product thereof, and a polyolefin copolymer. More particularly, the invention relates to a propylene polymer composition having improved impact strength and tensile strength, a molded product thereof, and a polyolefin copolymer serving as a modifier for propylene polymer.

### Background Art

Conventionally, polypropylene has been in wide use, by virtue of its low cost and excellent mechanical characteristics, heat resistance, resistance to chemicals, and processability. However, some physical properties of polypropylene, such as impact resistance and elongation at break, are not satisfactory, leading to a drawback that polypropylene embrittles upon deformation.

One possible approach toward improving impact resistance and elongation at break of polypropylene is blending of a rubber ingredient with a propylene polymer component. Specific examples of the blending method include:

(1) blending of a rubber ingredient with a propylene polymer component at a polymerization stage (although the formed blend is generally called "propylene block copolymer," the blend is not, in a strict sense, a block copolymer in which propylene polymer segments and rubber ingredient segments are chemically linked); and

(2) blending of a rubber ingredient with a propylene polymer or a propylene block copolymer by means of a kneader. However, each of these methods provides a blend which has poor interfacial strength between polypropylene and the rubber ingredient, resulting in unsatisfactory physical properties. In addition, when a rubber ingredient is used in a large amount so as to attain satisfactory impact resistance, the rubber content of the entire material increases, resulting in a disadvantageous increase in cost.

In an attempt to enhance impact strength of polypropylene while maintaining rigidity thereof, a miscibilizer is added so as to increase interfacial strength between polypropylene and a rubber ingredient. Specifically, Japanese Patent Application Laid-Open (*kokai*) No. 2000-154222 discloses that a block copolymer in which polypropylene segments and poly(ethylene-co-propylene) segments are chemically linked has excellent impact resistance and is useful as a miscibilizer for rendering crystalline polyolefin and amorphous polyolefin miscible. However, the copolymer is produced exclusively in the form of an A-B type block copolymer in which polypropylene segments and poly(ethylene-co-propylene) segments are chemically linked at a proportion of 1 : 1, since the copolymer is produced through the same procedure as employed in a conventional block copolymer production method. Thus, the effect of enhancing the interfacial strength cannot be fully attained. In addition, since the poly(ethylene-co-propylene) segments are formed from a propylene copolymer, the effect of improving physical properties at low temperature, *inter alia* impact strength, is unsatisfactory.

Japanese Patent Application Laid-Open (*kokai*) No. 10-338704 discloses a propylene copolymer that is suitably employed as a miscibilizer for rendering a propylene homopolymer and a propylene copolymer miscible. Specifically, the publication discloses a propylene copolymer having propylene copolymer graft chains. However, the graft chains have unsatisfactory length, and therefore, the effect of increasing interfacial strength between the propylene homopolymer and propylene copolymer is not fully attained. As a result, impact strength cannot be fully enhanced.

### Disclosure of the Invention

Under such circumstances, an object of the present invention is to provide a propylene block copolymer that has excellent impact strength and tensile strength while maintaining high rigidity. Another object of the invention is to provide a composition containing a propylene polymer and a rubber ingredient, the composition having similar characteristics.

The present inventors have carried out extensive studies in order to overcome the aforementioned problems, and have found that the object of the present invention is attained by a propylene polymer composition comprising a component (A) which is either a propylene block copolymer or a composition containing a propylene polymer and a rubber ingredient; and a component (B) which is a polyolefin copolymer that contains a fraction eluting at 101°C or higher through temperature rising elution fractionation chromatography, the fraction exhibiting a peak attributed to an ethylene chain, the polyolefin copolymer having a specific intrinsic viscosity; that a propylene polymer composition comprising a component (A) which is either a propylene block copolymer or a composition containing a propylene polymer and a rubber ingredient; and a component (B) which is a polyolefin copolymer that contains a copolymer in which a propylene polymer segment and an ethylene copolymer segment are chemically linked has well-balanced

rigidity and impact resistance; and that the foregoing component (B) in which a propylene polymer segment and an ethylene copolymer segment are chemically linked is useful as a modifier for a propylene block copolymer or a composition containing a propylene polymer and a rubber ingredient. The present invention has been accomplished on the basis of these findings.

Accordingly, the present invention provides the following propylene polymer compositions and polyolefin copolymers.

[1] A propylene polymer composition comprising a component (A) which is either a propylene block copolymer or a composition containing a propylene polymer and a rubber ingredient; and a component (B) which is a polyolefin copolymer that contains a fraction eluting at 101°C or higher through temperature rising elution fractionation chromatography, the fraction exhibiting a $^{13}$C-NMR peak attributed to an ethylene chain, the polyolefin copolymer having an intrinsic viscosity falling within a range of 0.5 to 10.0 deciliter/g as measured at 135°C in decalin.

[2] A propylene polymer composition according to the foregoing item [1], wherein the polyolefin copolymer as component (B) contains a fraction eluting at 101°C or higher through temperature rising elution fractionation chromatography, the fraction exhibiting triple chain peaks as measured through $^{13}$C-NMR within a range of 24 to 34 ppm, the peaks satisfying the following equation:

$$EP^*E \times PE^*E/(PP^*E \times PE^*P) > 0.01$$

wherein EP*E, PE*E, PP*E, and PE*P represent peak intensities attributed to the corresponding triple chains formed of ethylene (E) and propylene (P), and "*" represents a monomer containing a carbon atom to be measured.

[3] A propylene polymer composition according to the foregoing item [1] or item [2], wherein the polyolefin copolymer as component (B) contains a copolymer in which an ethylene copolymer segment and a propylene polymer segment are chemically linked.

[4] A propylene polymer composition according to the foregoing item [3], wherein the ethylene copolymer segment contained in the polyolefin copolymer as component (B) has a peak-top molecular weight, as measured through GPC, of higher than 7,000.

[5] A propylene polymer composition according to the foregoing item [3] or item [4], wherein the ethylene copolymer segment contained in the polyolefin copolymer as component (B) is a copolymer formed from ethylene and a C3 to C20 α-olefin.

[6] A propylene polymer composition according to any of the foregoing items [3] to [5], wherein the ethylene copolymer segment contained in the polyolefin copolymer as component (B) contains a unit originating from ethylene chains in an amount of exceeding 50 mol% and less than 90 mol%.

[7] A propylene polymer composition according to any of the foregoing items [3] to [6], wherein the polyolefin copolymer as component (B) has a melting point higher than 130°C.

[8] A molded product formed of a propylene polymer composition as recited in any of the foregoing items [1] to [7].

[9] A polyolefin copolymer in which a propylene polymer segment and an ethylene copolymer segment are chemically linked, characterized in that (a) the polyolefin copolymer contains a fraction eluting at 101°C or higher through temperature rising elution fractionation chromatography, the fraction exhibiting a $^{13}$C-NMR peak attributed to an ethylene chain; in that (b) the polyolefin copolymer has an intrinsic viscosity falling within a range of 0.5 to 10.0 deciliter/g as measured at 135°C in decalin; and in that (c) the ethylene copolymer segment has a peak-top molecular weight, as measured through GPC, of higher than 7,000.

[10] A polyolefin copolymer according to the foregoing item [9], wherein the ethylene copolymer segment is a copolymer formed from ethylene and a C3 to C20 α-olefin.

[11] A polyolefin copolymer according to the foregoing item [9] or item [10], wherein the ethylene copolymer segment contains a unit originating from ethylene chains in an amount of exceeding 50 mol% and less than 90 mol%.

[12] A polyolefin copolymer according to any of the foregoing items [9] to [11], which has a melting point higher than the temperature of 130°C.

## Best Modes for Carrying Out the Invention

First of all, the propylene polymer composition of the present invention comprises a component (A) which is either a propylene block copolymer or a component containing a propylene polymer and a rubber ingredient; and a component (B) which is a polyolefin copolymer having specific physical properties.

The propylene block copolymer serving as the component (A) predominantly contains a crystalline propylene homopolymer or a crystalline propylene copolymer and a random copolymer component formed from propylene and one or more α-olefins other than propylene (hereinafter such α-olefin(s) may be referred to as "co-α-olefin(s)"). Generally, the propylene block copolymer contains a crystalline propylene homopolymer or a crystalline propylene copolymer in an amount of 60 to 97 wt.%, preferably 70 to 93 wt.%, and an amorphous random copolymer component in an amount of 40 to 3 wt.%, preferably 30 to 7 wt.%. The crystalline propylene block copolymer may include a monomer such as ethylene in an amount of 2 wt.% or less. The random copolymer component generally contains propylene in an amount of 80 to 20 wt.%, preferably 70 to 45 wt.%, and a co-olefin such as ethylene in an amount of 20 to 80 wt. %, preferably 30 to 55%. In addition, the random copolymer component may further contain a small amount of polyene component.

The propylene block copolymer can be produced through multi-step polymerization. The order of polymerization steps and the number of polymerization steps can be arbitrarily selected. According to one possible method which can be employed, homopolymerization of propylene or copolymerization of propylene and a co-olefin (≤2 wt.%) is performed in a first polymerization step so as to yield a crystalline propylene homopolymer or a crystalline propylene copolymer, and, in a second or further step, random copolymerization of a co-α-olefin and propylene or random copolymerization of a co-α-olefin, propylene, and a polyene is performed. Examples of co-α-olefins include linear α-olefins such as ethylene, butene-1, pentene-1, and hexene-1 and branched α-olefins such as 3-methylbutene-1, and 4-methylpentene-1. These α-olefins may be used singly or in combination of two or more kinds. However, ethylene is particularly preferred. Examples of polyenes include dicyclopentadiene and tricyclopentadiene. These polyenes may be used singly or in combination of two or more kinds.

A composition of a propylene polymer blended with a rubber ingredient can be employed as the component (A). Examples of the rubber ingredient include natural rubber, styrene-butadiene copolymer rubber, butadiene rubber, isoprene rubber, ethylene-propylene copolymer rubber, ethylene-propylene-diene copolymer rubber, acrylonitrile-butadiene copolymer rubber, chloroprene rubber, butyl rubber, urethane rubber, silicone rubber, acrylic rubber, epichlorohydrin rubber, and ethylene copolymer rubber; particularly ethylene-butene copolymer rubber and ethylene-octene copolymer rubber synthesized in the presence of a metallocene catalyst.

The polyolefin copolymer serving as the component (B), which is to incorporated as a modifier into the propylene polymer composition of the present invention, contains a fraction eluting at 101°C or higher through temperature rising elution fractionation (TREF) chromatography, the fraction exhibiting a $^{13}$C-NMR peak attributed to an ethylene chain through nuclear magnetic resonance spectroscopy employing a carbon isotope.

The polyolefin copolymer serving as the component (B) has an intrinsic viscosity [η] falling within a range of 0.5 to 10.0 dl/g as measured at 135°C in decalin, preferably 0.6 to 7.0 dl/g. When a polyolefin copolymer as component (B) having an intrinsic viscosity [η] less than 0.5 dl/g is added to the component (A) which is either a propylene block copolymer or a composition containing a propylene polymer and a rubber ingredient, the effect of enhancing interfacial strength is poor, resulting in poor effect of enhancing impact strength. When the viscosity is in excess of 10.0 dl/g, melt viscosity increases, thereby possibly deteriorating molding processability.

It is a key factor that the polyolefin copolymer serving as the component (B) contains a fraction eluting at 101°C or higher through temperature rising elution fractionation chromatography, the fraction containing an ethylene copolymer of random characteristics not an ethylene copolymer of block characteristics, as determined by $^{13}$C-NMR.

Specifically, triple chain peaks obtained through $^{13}$C-NMR preferably satisfies the following relationship in terms of intensity ratio: $EP^*E \times PE^*E/(PP^*E \times PE^*P) > 0.02$, more preferably $EP^*E \times PE^*E/(PP^*E \times PE^*P) > 0.05$. When $EP^*E \times PE^*E/(PP^*E \times PE^*P)$ is 0.01 or less, ethylene residues contained in the ethylene copolymer tend to assume block characteristics, thereby possibly deteriorating physical properties of the produced propylene polymer composition.

Peak assignment of the above $^{13}$C-NMR measurement is performed in accordance with a method proposed by Kakugo *et al.* [Macromolecules, 15, 1150 (1982)], and the value of the above formula is calculated by use of the relative intensities of triple chain peaks (PP*P, PP*E, EP*P, EP*E, EE*E, EE*P, PE*E, PE*P) as measured in a range of 24 to 34 ppm.

The polyolefin copolymer serving as the component (B) preferably has a melting point higher than the temperature of 130°C. The melting point can be measured in accordance with a method described in Examples. When the melting point is 130°C or lower, crystallinity of the polyolefin copolymer is poor. Thus, when such a polyolefin copolymer is blended with a propylene block copolymer or a composition containing a propylene polymer and a rubber ingredient, the effect of bonding the polypropylene matrix and the rubber ingredient is poor. Therefore, the effect of enhancing impact strength of the propylene polymer composition may be insufficient, and rigidity of the propylene polymer composition may decrease. Since the melting point varies in accordance with stereoregularity and co-monomer content of the polyolefin copolymer, the melting point can be regulated by modifying the type of catalyst, content or amount of each catalyst component, proportions of monomers fed, polymerization temperature, polymerization pressure, etc.

The polyolefin copolymer serving as the component (B) preferably contains a copolymer in which an ethylene copolymer segment and a propylene polymer segment are chemically linked.

As described in the Referential Example herein below, the highest elution temperature of linear high-density

polyethylene is 100.6°C. Accordingly, when the polyolefin copolymer serving as the component (B) is formed of an ethylene copolymer segment and a propylene polymer segment and contains a fraction eluting at 101°C or higher through temperature rising elution fractionation chromatography, the fraction exhibiting a $^{13}$C-NMR peak attributed to an ethylene chain, it is possible to confirm that the ethylene copolymer segment and the propylene polymer segment are chemically linked each other.

The ethylene copolymer segment chemically linked in the polyolefin copolymer as component (B) preferably has a peak-top molecular weight, as measured through gel permeation chromatography (GPC), of higher than 7,000, more preferably higher than 10,000.

When the peak-top molecular weight of the chemically linked ethylene copolymer segment, as measured through GPC, is lower than 7,000, the effect of enhancing interfacial strength provided by the polyolefin copolymer serving as the component (B) is insufficiently attained, thereby possibly resulting in a poor effect of enhancing impact strength.

The upper limit of the peak-top molecular weight of the chemically linked ethylene copolymer segment, as measured through GPC, is generally 1,000,000. When the GPC peak-top molecular weight is in excess of 1,000,000, reaction of the ethylene copolymer segment and the propylene polymer segment is difficult to proceed, thereby considerably lowering the effect of forming chemical bonding. In addition, the effect of enhancing low-temperature impact strength of such a propylene polymer composition may be poor.

Modifying polymerization conditions including the content of each catalyst, amount of a polymerization catalyst, proportions of monomers fed, polymerization temperature, and polymerization pressure can regulate the molecular weight of the ethylene copolymer segment. One generally employed method for controlling the molecular weight is the use of hydrogen as a chain-transfer agent. However, the amount of hydrogen used should be limited to a low level, since hydrogen reduces the number of reactive sites formed of a carbon-carbon double bond originating from an end vinyl group and a non-conjugated diene compound.

The ethylene copolymer segment contained in the polyolefin copolymer serving as the component (B) preferably contains a unit originating from ethylene chains in an amount of exceeding 50 mol% and less than 90 mol%, more preferably exceeding 50 mol% and less than 80 mol%. When the amount of a unit originating from ethylene chains is 50 mol% or less, the effect of enhancing low-temperature impact strength is poor, whereas when the amount is 90 mol% or more, the effect of enhancing the impact strength of the propylene polymer composition may be insufficient, since the polyolefin copolymer as component (B) is difficult to be present in an interface between the polypropylene matrix and the rubber ingredient domain.

The amount of a unit originating from ethylene chains contained in the ethylene copolymer segment (i.e., ethylene content) is determined through $^{13}$C-NMR as described herein below.

The ethylene copolymer segment can be produced through the below-described method (1) or (2).

(1) Copolymerization of ethylene and at least one species selected from among C3 to C20 $\alpha$-olefins, cyclic olefins, styrene, and styrene derivatives, in the presence of a catalyst for forming an end vinyl group at high efficiency.

(2) Copolymerization of ethylene, a non-conjugated diene, and at least one species selected from among C3 to C20 $\alpha$-olefins, cyclic olefins, styrene, and styrene derivatives, in the presence of a specific catalyst.

The ethylene content can be regulated on the basis of polymerization conditions including proportions of monomers fed, polymerization temperature, and polymerization time.

No particular limitation is imposed on the species of the catalyst for forming an end vinyl group at high efficiency employed in method (1). However, a preferably employed catalyst is formed of a specific transition metal compound (A) and at least one compound (B) selected from among the following compounds: an aluminum oxy compound (B-1); an ionic compound (B-2) which can be transformed into a cation through reaction with the aforementioned transition metal compound; and clay, clay mineral, and an ion-exchangeable layered compound (B-3).

Examples of suitable transition metal compound (A) in the catalyst for forming an end vinyl group at high efficiency employed in method (1) include double-bridged transition metal compounds having a structure represented by general formula (I).

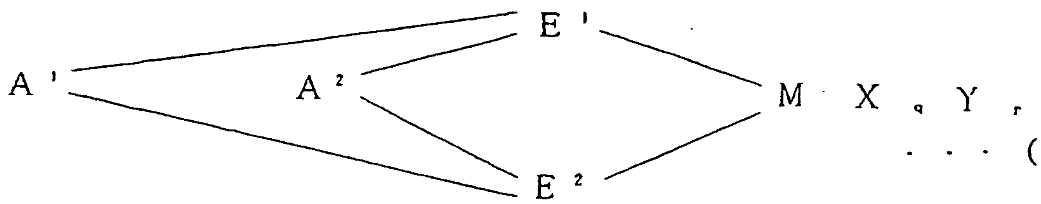

· · · ( I )

In the above general formula (I), M represents a metal element belonging to Group 3 to 10 in the periodic table or a lanthanoid metal element. Specific examples include titanium, zirconium, hafnium, yttrium, vanadium, chromium, manganese, nickel, cobalt, palladium, and lanthanoid metals. Of these, titanium, zirconium, hafnium, chromium, vanadium, and lanthanoid metals are preferred, with titanium, zirconium, and hafnium being particularly preferred from the viewpoint of, for example, olefin polymerization activity. Each of $E^1$ and $E^2$, which may be identical to or different from each other, represents a σ-bonding ligand or a π-bonding ligand, and $E^1$ and $E^2$ may be linked via $A^1$ or $A^2$ to form a bridge structure. Examples of ligands represented by $E^1$ include a cyclopentadienyl group, a substituted cyclopentadienyl group, an indenyl group, a substituted indenyl group, a heterocyclopentadienyl group, a substituted heterocyclopentadienyl group, an amido group (-N<), a phosphido group (-P<), hydrocarbon groups (>CR-, >C<), and silicon-containing groups (-SiR-, >Si<) (wherein R represents hydrogen, a C1-C20 hydrocarbon group, or a C1-C20 heteroatom-containing group). Examples of ligands represented by $E^2$ include a cyclopentadienyl group, a substituted cyclopentadienyl group, an indenyl group, a substituted indenyl group, a heterocyclopentadienyl group, a substituted heterocyclopentadienyl group, amido groups (-N<, -NR-), a phosphido groups (-P<, -PR-), oxygen (-O-), sulfur (-S-), selenium (-Se-), hydrocarbon groups ($-C(R)_2-$, >CR-, >C<), and silicon-containing groups (>SiR-, $-Si(R)_2-$, >Si<) (wherein R represents hydrogen, a C1-C20 hydrocarbon group, or a C1-C20 heteroatom-containing group).

X represents a σ-bonding ligand. When a plurality of Xs are present, these ligands may be identical to or different from one another and may be cross-linked with Y, $E^1$, $E^2$, or X. Examples of ligands represented by X include a halogen atom, a C1-20 hydrocarbon group, a C1-20 alkoxy group, a C6-20 aryloxy group, a C1-20 amido group, a C1-20 silicon-containing group, a C1-20 phosphido group, a C1-20 sulfido group, and a C1-20 acyl group. Y represents a Lewis base. When a plurality of Y is present, these bases may be identical to or different from one another and may be cross-linked with X, $E^1$, $E^2$, or Y. Examples of the Lewis base represented by Y include amines, ethers, phosphines, and thioethers.

Each of $A^1$ and $A^2$, which may be identical to or different from each other, represents a cross-linking group. Preferably, at least one of them is formed exclusively from a carbon bridge. Herein, the cross-linking group exclusively formed from a carbon bridge refers to a group represented by the following formula:

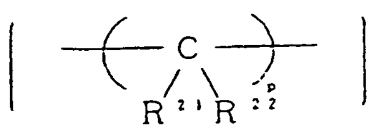

(wherein each of $R^{21}$ and $R^{22}$, which may be identical to or different from each other and may be linked together to form a ring structure, represents a hydrogen atom, a halogen atom, a C1-20 hydrocarbon group, a C1-20 halogen-containing hydrocarbon group, a silicon-containing group, or a heteroatom-containing group; and "**p**" is an integer of 1 to 4).

Examples of such cross-linking groups include methylene, ethylene, ethylidene, isopropylidene, cyclohexylidene, 1,2-cyclohexylene, and vinylidene ($CH_2=C=$).

Examples of other specific structures represented by $A^1$ or $A^2$ include $R'_2Si$, $R'_2Ge$, $R'_2Sn$, R'Al, R'P, R'P(=O), R'N, oxygen (-O-), sulfur (-S-), and selenium (-Se) (wherein R' represents a hydrogen atom, a halogen atom, a C1-20 hydrocarbon group, a C1-20 halogen-containing hydrocarbon group, a silicon-containing group, or a hetero-atom-containing group; when two R's are present, these groups may be identical to or different from each other and may be linked together to form a ring structure).

Examples of such cross-linking groups include dimethylsilylene, tetramethyldisilylene, dimethylgermylene, dimethylstannylene, methylborylidene ($CH_3$-B<), methylalumilidene ($CH_3$-Al<), phenylphosphiridene(Ph-P<), phenylphosphoridene (Ph-P(=O)<), methylimido, oxygen (-O-), sulfur (-S-), and selenium (-Se-). Examples of $A^1$ and $A^2$ further include vinylene (-CH=CH-), o-xylylyne (phenyl-1,2-dimethylene), and 1,2-phenylene. The "**q**" is an integer of

1 to 5 [i.e., (valence of M) - 2], and "**r**" is an integer of 0 to 3.

Examples of transition metal compounds represented by the aforementioned general formula (I) include, but are not limited to, (1,1'-dimethylsilylene)(2,2'-isopropylidene)-bis(cyclopentadienyl)zirconium dichloride, (1,1'-dimethylsilylene)(2,2'-dimethylsilylene)-bis(cyclopentadienyl)zirconium dichloride, (1,1'-dimethylsilylene)(2,2'-isopropylidene)-bis(cyclopentadienyl)zirconium dimethyl, (1,1'-dimethylsilylene)(2,2'-isopropylidene)-bis(cyclopentadienyl)zirconium dibenzyl, (1,1'-dimethylsilylene)(2,2'-isopropylidene)-bis(cyclopentadienyl)zirconium bis(trimethylsilyl), (1,1'-dimethylsilylene)(2,2'-isopropylidene)-bis(cyclopentadienyl)zirconium bis(trimethylsilylmethyl), (1,1'-dimethylsilylene)(2,2'-isopropylidene)-bis(cyclopentadienyl)zirconium dimethoxide, (1,1'-dimethylsilylene).(2,2'-isopropylidene)-bis(cyclopentadienyl)zirconium bis(trifluoromethanesulfonate), (1,1'-dimethylsilylene)(2,2'-methylene)-bis(cyclopentadienyl)zirconium dichloride, (1,1'-ethylene)(2,2'-methylene)-bis(cyclopentadienyl)zirconium dichloride, (1,2'-dimethylsilylene)(2,1'-ethylene)-bis(indenyl)zirconium dichloride, (1,1'-dimethylsilylene)(2,2'-ethylene)-bis(indenyl)zirconium dichloride, (1,1'-ethylene)(2,2'-dimethylsilylene)-bis(indenyl)zirconium dichloride, (1,1'-dimethylsilylene)(2,2'-cyclohexylidene)-bis(indenyl)zirconium dichloride, (1,2'-dimethylsilylene)(2,1'-isopropylidene)-bis(indenyl)zirconium dichloride, (1,1'-isopropylidene)(2,2'-dimethylsilylene)-bis(indenyl)zirconium dichloride, (1,1'-dimethylsilylene)(2,2'-isopropylidene)-bis(indenyl)zirconium dichloride, (1,1'-dimethylsilylene)(2,2'-isopropylidene)-bis(indenyl)zirconium dimethyl, (1,1'-dimethylsilylene)(2,2'-isopropylidene)-bis(indenyl)zirconium dibenzyl, (1,1'-dimethylsilylene)(2,2'-isopropylidene)-bis(indenyl)zirconium bis(trimethylsilyl), (1,1'-dimethylsilylene)(2,2'-isopropylidene)-bis(indenyl)zirconium bis (trimethylsilylmethyl), (1,1'-dimethylsilylene)(2,2'-isopropylidene)-bis(indenyl)zirconium dimethoxide, (1,1'-dimethylsilylene)(2,2'-isopropylidene)-bis(indenyl)zirconium bis (trifluoromethanesulfonate), (1,1'-dimethylsilylene)(2,2'-isopropylidene)-bis(4,5,6,7-tetrahydroindenyl)zirconium dichloride, (1,2'-ethylene)(2,1'-isopropylidene)-bis(indenyl)zirconium dichloride, (1,1'-ethylene)(2,2'-isopropylidene)-bis(indenyl)zirconium dichloride, (1,1'-isopropylidene)(2,2'-ethylene)-bis(indenyl)zirconium dichloride, (1,1'-isopropylidene)(2,2'-isopropylidene)-bis(cyclopentadienyl)zirconium dichloride, (1,1'-dimethylsilylene)(2,2'-isopropylidene)-(3,4-dimethylcyclopentadienyl)(3',4'-dimethylcyclopentadienyl)zirconium dichloride, (1,1'-dimethylsilylene)(2,2'-isopropylidene)-(4-methylcyclopentadienyl)(4'-methylcyclopentadienyl)zirconium dichloride, (1,1'-dimethylsilylene)(2,2'-isopropylidene)-(3,4,5-trimethylcyclopentadienyl)(3',4',5'-trimethylcyclopentadienyl)zirconium dichloride, (1,1'-dimethylsilylene)(2,2'-isopropylidene)-(4-n-butylcyclopentadienyl)(4'-n-butylcyclopentadienyl)zirconium dichloride, (1,1'-dimethylsilylene)(2,2'-isopropylidene)-(4-tert-butylcyclopentadienyl)(4'-tert-butylcyclopentadienyl)zirconium dichloride, (1,2'-dimethylsilylene)(2,1'-isopropylidene)-(3-methylindenyl)(3'-methylindenyl)zirconium dichloride, (1,1'-dimethylsilylene)(2,2'-isopropylidene)-(3-methylindenyl)(3'-methylindenyl)zirconium dichloride, (1,1'-isopropylidene)(2,2'-dimethylsilylene)-(3-methylindenyl)(indenyl)zirconium dichloride, (1,1'-dimethylsilylene)(2,2'-isopropylidene)-(4,7-dimethylindenyl)(indenyl)zirconium dichloride, (1,1'-dimethylsilylene)(2,2'-isopropylidene)-(4,5-benzoindenyl)(indenyl)zirconium dichloride, (1,1'-dimethylsilylene)(2,2'-isopropylidene)-(4,7-dimethylindenyl)(4',7'-dimethylindenyl)zirconium dichloride, (1,1'-dimethylsilylene)(2,2'-isopropylidene)-(4,5-benzoindenyl)(4,5-benzoindenyl)zirconium dichloride, (1,1'-dimethylsilylene)(2,2'-isopropylidene)-(3-methylindenyl)(3'-methylindenyl)zirconium dichloride, (1,1'-dimethylsilylene)(2,2'-isopropylidene)-(3-ethylindenyl)(3'-ethylindenyl)zirconium dichloride, (1,1'-dimethylsilylene)(2,2'-isopropylidene)-(3-n-butylindenyl)(3'-n-butylindenyl)zirconium dichloride, (1,1'-dimethylsilylene)(2,2'-isopropylidene)-(3-tert-butylindenyl)(3'-tert-butylindenyl)zirconium dichloride, (1,1'-dimethylsilylene)(2,2'-isopropylidene)-(3-trimethylsilylindenyl)-(3'-trimethylsilylindenyl)zirconium dichloride, (1,1'-dimethylsilylene)(2,2'-isopropylidene)-(3-benzylindenyl)(3'-benzylindenyl)zirconium dichloride, (1,1'-dimethylsilylene)(2,2'-ethylene)-(indenyl)(cyclopentadienyl)zirconium dichloride, (1,1'-dimethylsilylene)(2,2'-isopropylidene)-(indenyl)(cyclopentadienyl)zirconium dichloride, (3,3'-isopropylidene)(4,4'-isopropylidene)-(1-phosphacyclopentadienyl)(1'-phosphacyclopentadienyl)zirconium dichloride, and (3,1'-isopropylidene)(4,2'-isopropylidene)-(1-phosphacyclopentadienyl)(4'-cyclopentadienyl)zirconium dichloride. Examples also include titanium compounds and hafnium compounds which are structurally equivalent to zirconium compounds. Similar compounds of a metal element belonging to another Group and those of a lanthanoid metal element may also be used.

Examples of preferred compound (A) of the catalyst employed in method (1) include compounds and derivatives represented by general formula (II).

$$Cp_2M^1R^3{}_aR^4{}_b \qquad (II)$$

In the above general formula (II), $M^1$ represents a transition metal such as titanium, zirconium, hafnium, vanadium, chromium, and a lanthanoid metal, and Cp represents a cyclic unsaturated hydrocarbon group such as a cyclopentadienyl group, a substituted cyclopentadienyl group, an indenyl group, a substituted indenyl group, a tetrahydroindenyl group, a substituted tetrahydroindenyl group, a fluorenyl group, or a substituted fluorenyl group. Carbon atoms of these cyclopentadienyl groups may be partially substituted by a heteroatom such as nitrogen or phosphorus. Each of $R^3$ and $R^4$ represents a ligand such as a σ-bonding ligand, a chelate ligand, or a Lewis base. Specific examples

of the σ-bonding ligand include a hydrogen atom, an oxygen atom, a sulfur atom, a nitrogen atom, a phosphorous atom, a halogen atom, a C1-20 alkyl group, a C6-20 aryl group, a C6-20 alkylaryl group, a C6-20 arylalkyl group, an allyl group, a substituted allyl group, and silicon-containing substituents. Examples of the chelate ligand include an acetylacetonato group and a substituted acetylacetonato group. Each of "**a**" and "**b**" is independently an integer of 0 to 4. When the above Cp has a substituent, the substituent is preferably a C1-C20 alkyl group. When two Cps are present, these Cps may be identical to or different from each other. $M^1$ is preferably titanium, zirconium, or hafnium.

Examples of compounds represented by the above general formula (II) include bis(cyclopentadienyl)dimethylzirconium, bis(cyclopentadienyl)diphenylzirconium, bis(cyclopentadienyl)diethylzirconium, bis(cyclopentadienyl) dibenzylzirconium, bis(cyclopentadienyl)dichlorozirconium, bis(cyclopentadienyl)dihydridozirconium, bis(cyclopentadienyl)monochloromonohydridozirconium, bis(methylcyclopentadienyl)dimetylzirconium, bis(methylcyclopentadienyl) dichlorozirconium, bis(methylcyclopentadienyl)dibenzylzirconium, bis(pentamethylcyclopentadienyl)dimethylzirconium, bis(pentamethylcyclopentadienyl)dichlorozirconium, bis(pentamethylcyclopentadienyl)dibenzylzirconium, bis (pentamethylcyclopentadienyl)chloromethylzirconium, bis (pentamethylcyclopentadienyl)hydridomethylzirconium, and (cyclopentadienyl) (pentamethylcyclopentadienyl) dichlorozirconium. Examples also include titanium compounds and hafnium compounds which are structurally equivalent to these zirconium compounds.

Examples of compound (A) of the catalyst employed in method (1) also include compounds represented by general formula (VIII).

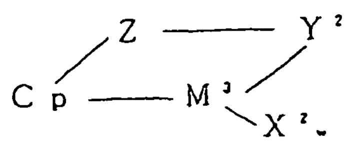

· · · (VIII)

In the compounds represented by general formula (VIII), the same Cp species as employed in the compounds represented by general formula (II) may be used. $M^3$ represents a titanium atom, a zirconium atom, or a hafnium atom, and $X^2$ represents a hydrogen atom, a halogen atom, a C1-C20 alkyl group, a C6-C20 aryl group, alkylaryl group, or arylalkyl group, or a C1-C20 alkoxy group. Z represents $SiR^9_2$, $CR^9_2$, $SiR^9_2SiR^9_2$, $CR^9_2CR^9_2$, $CR^9_2CR^9_2CR^9_2$, $CR^9=CR^9$, $CR^9_2SiR^9_2$, or $GeR^9_2$. $Y^2$ represents $-N(R^{10})-$, -O-, -S-, or $-P(R^{10})-$. $R^9$ represents alkyl, aryl, silyl, halogenated alkyl, or halogenated aryl, having hydrogen atoms or 1 to 20 non-hydrogen atoms. When Z has a plurality of $R^9$s, these groups may be different from one another. $R^{10}$ represents a C1-C10 alkyl group or a C6-C10 aryl group. One or more $R^9$s and 1 to 30 non-hydrogen atoms may form a condensed ring system. The "**w**" is 1 or 2.

Specific examples of compounds represented by the above general formula (VIII) include (tert-butylamido) (tetramethyl-η5-cyclopentadienyl)-1,2-ethanediylzirconium dichloride, (tert-butylamido)(tetramethyl-η5-cyclopentadienyl)-1,2-ethanediyltitanium dichloride, (methylamido)(tetramethyl-η5-cyclopentadienyl)-1,2-ethanediylzirconium dichloride, (methylamido) (tetramethyl-η5-cyclopentadienyl)-1,2-ethanediyltitanium dichloride, (ethylamido) (tetramethyl-η5-cyclopentadienyl)-methylenetitanium dichloride, (tert-butylamido) dimethyl (tetramethyl-η5-cyclopentadienyl)-silanetitanium dichloride, (tert-butylamido) dimethyl (tetramethyl-η5-cyclopentadienyl)-silanezirconium dibenzyl, (benzylamido)dimethyl-(tetramethyl-η5-cyclopentadienyl)-silanetitanium dichloride, and (phenylphosphido) dimethyl (tetramethyl-η5-cyclopentadienyl)-silanezirconium dibenzyl.

Examples of preferably employed specific catalysts employed in method (2) include those formed of one compound (A) selected from among Group 4 transition metal compounds in the Periodic Table having a cyclopentadienyl group and at least one compound (B) selected from among the following compounds: an aluminum oxy compound (B-1); an ionic compound (B-2) which can be transformed into a cation through reaction with the aforementioned transition metal compound (A); and clay, clay mineral, and an ion-exchangeable layered compound (B-3).

Examples of Group 4 transition metal compounds having a cyclopentadienyl group, the compound (A), include compounds selected from among the following compounds (A-1), (A-2), and (A-3).

Compound (A-1):

Compound (A-1) is a transition metal compound represented by general formula (III):

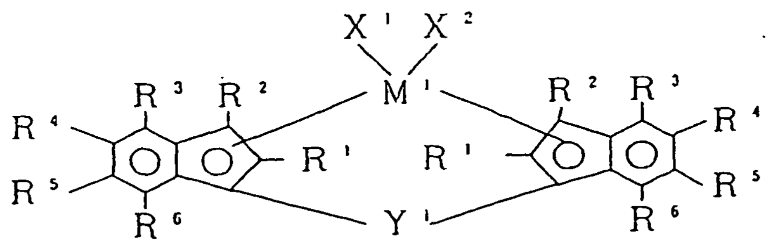

· · · (III)

(wherein each of $R^1$ to $R^6$ represents a hydrogen atom, a halogen atom, a C1-C20 hydrocarbon group, or a C1-C20 halogen-containing hydrocarbon group; at least one couple of $R^3$ & $R^4$, $R^4$ & $R^5$, and $R^5$ & $R^6$ may be linked to form a ring; each of $X^1$ and $X^2$ represents a hydrogen atom, a halogen atom, or a C1-C20 hydrocarbon group; $Y^1$ is a divalent cross-linking group for connecting two ligands; e.g., a C1-C20 hydrocarbon group, a C1-C20 halogen-containing hydrocarbon group, a silicon-containing group, a germanium-containing group, a tin-containing group, -O-, -CO-, -S-, $-SO_2-$, -Se-, $-NR^{18}-$, $-PR^{18}-$, $-P(O)R^{18}-$, $-BR^{18}-$, or $-AlR^{18}-$; $R^{18}$ represents a hydrogen atom, a halogen atom, a C1-C20 hydrocarbon group, or a C1-C20 halogen-containing hydrocarbon group; and $M^1$ represents titanium, zirconium, or hafnium).

The transition metal compounds represented by general formula (III) having a ring formed by linking of at least one couple of $R^3$ & $R^4$, $R^4$ & $R^5$, and $R^5$ & $R^6$ are known as BASF type complexes.

Examples of $R^1$ to $R^6$ in the general formula (III) include halogen atoms such as a chlorine atom, a bromine atom, a fluorine atom, and an iodine atom; C1-C20 hydrocarbon groups such as an alkyl group (e.g., a methyl group, an ethyl group, an n-propyl group, an isopropyl group, an n-butyl group, an isobutyl group, a tert-butyl group, an n-hexyl group, or an n-decyl group); an aryl group (e.g., a phenyl group, 1-naphthyl group, or 2-naphthyl group); an aralkyl group (e.g., a benzyl group); and C1-C20 halogen-containing hydrocarbon groups such as the aforementioned hydrocarbon groups in which at least one hydrogen atom is substituted by an appropriate halogen atom. Substituent represented by $R^1$ to $R^6$ may be identical to or different from one another, and at least one couple of adjacent groups; i.e., $R^3$ & $R^4$, $R^4$ & $R^5$, and $R^5$ & $R^6$ must be linked to form a ring. Examples of such ring-formed indenyl groups include a 4,5-benzoindenyl group, an α-acenaphthoindenyl group, and C1-C10-alkylsubstituted species thereof.

Examples of species of $X^1$ and $X^2$ include halogen atoms such as a chlorine atom, a bromine atom, a fluorine atom, and an iodine atom; C1-C20 hydrocarbon groups such as an alkyl group (e.g., a methyl group, an ethyl group, a propyl group, an isopropyl group, an n-butyl group, a tert-butyl group, or an n-hexyl group), an aryl group (e.g., a phenyl group), and an aralkyl group (e.g., a benzyl group). Substituents $X^1$ and $X^2$ may be identical to or different from each other. $Y^1$ a divalent groups for connecting two ligands. Examples of the divalent groups include C1-C20 hydrocarbon groups such as an alkylene group (e.g., a methylene group, a dimethylmethylene group, a 1,2-ethylene group, a dimethyl-1,2-ethylene group, a 1,4-tetramethylene group, or a 1,2-cyclopropylene group) and an arylalkylene group (e.g., a diphenylmethylene group); C1-C20 halogen-containing divalent hydrocarbon groups such as a chloroethylene group and a chloromethylene group; and silicon-containing divalent groups such as a methylsilylene group, a dimethylsilylene group, a diethylsilylene group, a diphenylsilylene group, and a methylphenylsilylene group. Examples also include germanium-containing groups and tin-containing groups which are structurally equivalent to the above silicon-containing groups. Generally, two ligands connected via $Y^1$ are identical to each other, but in some cases may be different from each other.

Examples of the transition metal compounds represented by general formula (III) serving as compound (A-1) include compounds disclosed in, for example, Japanese Patent Application Laid-Open (*kokai*) Nos. 6-184179 and 6-345809. Specific examples include benzoindenyl compounds and acenaphthoindenyl compounds such as rac-dimethylsilanediyl-bis-1-(2-methyl-4,5-benzoindenyl)zirconium dichloride, rac-phenylmethylsilanediyl-bis-1-(2-methyl-4,5-benzoindenyl)zirconium dichloride, rac-ethanediyl-bis-1-(2-methyl-4,5-benzoindenyl)zirconium dichloride, rac-butanediyl-bis-1-(2-methyl-4,5-benzoindenyl)zirconium dichloride, rac-dimethylsilanediyl-bis-1-(4,5-benzoindenyl)zirconium dichloride, rac-dimethylsilanediyl-bis-1-(2-methyl-a-methyl-α-acenaphthoindenyl)zirconium dichloride, and rac-phenylmethylsilanediyl-bis-1-(2-methyl-α-acenaphthoindenyl)zirconium dichloride. Examples also include titanium compounds and hafnium compounds which are structurally equivalent to these zirconium compounds.

Compound (A-1) is also an indenyl-skeleton transition metal compound represented by general formula (III) in which no couple of $R^3$ & $R^4$, $R^4$ & $R^5$, or $R^5$ & $R^6$ forms a ring or a similar transition metal compound having the corresponding 4,5,6,7-tetrahydroindenyl skeleton.

These transition metal compounds are known as Hoechst type complexes.

Examples of the transition metal compounds serving as compound (A-1) include those disclosed in, for example, Japanese Patent Application Laid-Open (*kokai*) Nos. 4-268308, 5-306304, 6-100579, 6-157661, 7-149815, 7-188318, and 7-258321.

Specific examples include aryl-substituted compounds such as dimethylsilanediyl-bis-1-(2-methyl-4-phenylindenyl)zirconium dichloride, dimethylsilanediyl-bis-1-(2-methyl-4-(1-naphthyl)indenyl)zirconium dichloride, dimethylsilanediyl-bis-1-(2-ethyl-4-phenylindenyl)zirconium dichloride, dimethylsilanediyl-bis-1-(2-ethyl-4-(1-naphthyl)indenyl) zirconium dichloride, phenylmethylsilanediyl-bis-1-(2-methyl-4-phenylindenyl)zirconium dichloride, phenylmethylsilanediyl-bis-1-(2-methyl-4-(1-naphthyl)indenyl)zirconium dichloride, phenylmethylsilanediyl-bis-1-(2-ethyl-4-phenylindenyl)zirconium dichloride, and phenylmethylsilanediyl-bis-1-(2-ethyl-4-(1-naphthyl)indenyl)zirconium dichloride; 2,4-substituted compounds such as rac-dimethylsilylene-bis-1-(2-methyl-4-ethylindenyl)zirconium dichloride, rac-dimethylsilylene-bis-1-(2-methyl-4-isopropylindenyl)zirconium dichloride, rac-dimethylsilylene-bis-1-(2-methyl-4-tert-butylindenyl)zirconium dichloride, rac-phenylmethylsilylene-bis-1-(2-methyl-4-isopropylindenyl)zirconium dichloride, rac-dimethylsilylene-bis-1-(2-ethyl-4-methylindenyl)zirconium dichloride, rac-dimethylsilylene-bis-1-(2,4-dimethylindenyl)zirconium dichloride, and rac-dimethylsilylene-bis-1-(2-methyl-4-ethylindenyl)zirconium dimethyl; 4,7-substituted, 2,4,7-substituted, and 3,4,7-substituted compounds such as rac-dimethylsilylene-bis-1-(4,7-dimethylindenyl)zirconium dichloride, rac-1,2-ethanediyl-bis-1-(2-methyl-4,7-dimethylindenyl)zirconium dichloride, rac-dimethylsilylene-bis-1-(3,4,7-trimethylindenyl)zirconium dichloride, rac-1,2-ethanediyl-bis-1-(4,7-dimethylindenyl)zirconium dichloride, and rac-1,2-butanediyl-bis-1-(4,7-dimethylindenyl)zirconium dichloride; 2,4,6-substituted compounds such as dimethylsilanediyl-bis-1-(2-methyl-4,6-diisopropylindenyl)zirconium dichloride, phenylmethylsilanediyl-bis-1-(2-methyl-4,6-diisopropylindenyl)zirconium dichloride, rac-dimethylsilanediyl-bis-1-(2-methyl-4,6-diisopropylindenyl)zirconium dichloride, rac-1,2-ethanediyl-bis-1-(2-methyl-4,6-diisopropylindenyl) zirconium dichloride, rac-diphenylsilanediyl-bis-1-(2-methyl-4,6-diisopropylindenyl)zirconium dichloride, rac-phenylmethylsilanediyl-bis-1-(2-methyl-4,6-diisopropylindenyl) zirconium dichloride, and rac-dimethylsilanediyl-bis-1-(2,4,6-trimethylindenyl)zirconium dichloride; 2,5,6-substituted compounds such as rac-dimethylsilanediyl-bis-1-(2,5,6-trimethylindenyl)zirconium dichloride; and 4,5,6,7-tetrahydrindenyl compounds such as rac-dimethylsilylene-bis-(2-methyl-4,5,6,7-tetrahydro-1-indenyl)zirconium dichloride, rac-ethylene-bis-(2-methyl-4,5,6,7-tetrahydro-1-indenyl)zirconium dichloride, rac-dimethylsilylene-bis-(2-methyl-4,5,6,7-tetrahydro-1-indenyl)zirconium dimethyl, rac-ethylene-bis-(2-methyl-4,5,6,7-tetrahydro-1-indenyl)zirconium dimethyl, and rac-ethylene-bis-(4,7-dimethyl-4,5,6,7-tetrahydro-1-indenyl)zirconium dichloride. Examples also include titanium compounds and hafnium compounds which are structurally equivalent to these zirconium compounds.

Compound (A-2):

Compound (A-2) is a transition metal compound represented by general formula (IX):

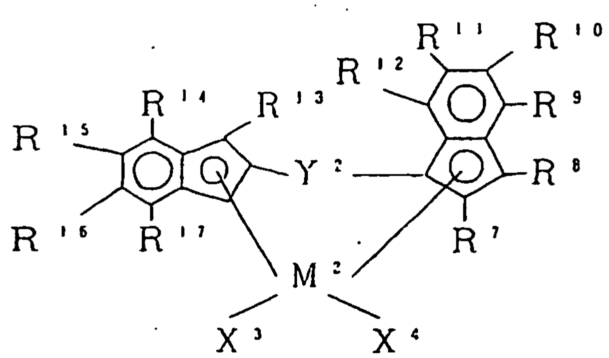

(IX)

(wherein each of $R^7$ to $R^{13}$, $R^{15}$, $R^{16}$, $X^3$, and $X^4$ represents a hydrogen atom, a halogen atom, a C1-C20 hydrocarbon group, a C1-C20 halogen-containing hydrocarbon group, a silicon-containing group, an oxygen-containing group, a sulfur-containing group, a nitrogen-containing group, or a phosphorus-containing group; $R^7$ and $R^8$ may be linked to form a ring; each of $R^{14}$ and $R^{17}$ represents a halogen atom, a C1-C20 hydrocarbon group, a C1-C20 halogen-containing hydrocarbon group, a silicon-containing group, an oxygen-containing group, a sulfur-containing group, a nitrogen-containing group, or a phosphorus-containing group; $Y^2$ represents a divalent cross-linking group for connecting two ligands; e.g., a C1-C20 hydrocarbon group, a C1-C20 halogen-containing hydrocarbon group, a silicon-containing group, a germanium-containing group, a tin-containing group, -O-, -CO-, -S-, $-SO_2-$, -Se-, $-NR^{18}-$, $-PR^{18}-$, $-P(O)R^{18}-$, $-BR^{18}-$, or $-AlR^{18}-$; $R^{18}$ represents a hydrogen atom, a halogen atom, a C1-C20 hydrocarbon group, or a C1-C20 halogen-containing hydrocarbon group; and $M^2$ represents titanium, zirconium, or hafnium).

The transition metal compound is a single-bridge complex.

Examples of substituent represented by $R^7$ to $R^{13}$, $R^{15}$, $R^{16}$, $X^3$, and $X^4$ in general formula (IX) include halogen atoms such as a chlorine atom, a bromine atom, a fluorine atom, and an iodine atom; C1-C20 hydrocarbon groups

such as an alkyl group (e.g., a methyl group, an ethyl group, an n-propyl group, an isopropyl group, an n-butyl group, an isobutyl group, a tert-butyl group, an n-hexyl group, or an n-decyl group), an aryl group (e.g., a phenyl group, a 1-naphthyl group, or a 2-naphthyl group), and an aralkyl group (e.g., a benzyl group); C1-C20 halogen-containing groups such as the aforementioned hydrocarbon groups in which at least one hydrogen atom is substituted by a suitable halogen atom (e.g., trifluoromethyl); silicon-containing groups such as a trimethylsilyl group and a dimethyl(t-butyl)silyl group; oxygen-containing groups such as a methoxy group and an ethoxy group; sulfur-containing groups such as a thiol group and a sulfo group; nitrogen-containing groups such as a dimethylamino group; and phosphorus-containing groups such as a methylphosphine group and a phenylphosphine group. $R^7$ and $R^8$ may be linked to form a ring such as fluorene. Specific examples of $R^{14}$ and $R^{17}$ include those described in relation to $R^7$ to $R^{13}$ (other than hydrogen atom). Each of $R^7$ and $R^8$ is preferably a hydrogen atom or a C≤6 alkyl group, more preferably a hydrogen atom, a methyl group, an ethyl group, an isopropyl group, or a cyclohexyl group, most preferably a hydrogen atom. Each of $R^9$, $R^{12}$, $R^{14}$, and $R^{17}$ is preferably a C≤6 alkyl group, more preferably a methyl group, an ethyl group, an isopropyl group, or a cyclohexyl group, most preferably an isopropyl group. Each of $R^{10}$, $R^{11}$, $R^{13}$, $R^{15}$, and $R^{16}$ is preferably a hydrogen atom. Each of $X^3$ and $X^4$ is preferably a halogen atom, a methyl group, an ethyl group, or a propyl group.

Specific examples of $Y^2$ include methylene, ethylene, ethylidene, isopropylidene, cyclohexylidene, 1,2-cyclohexylene, dimethylsilylene, tetramethyldisilylene, dimethylgermylene, methylborylidene ($CH_3$-B=), methylalumilidene ($CH_3$-Al=), phenylphosphiridene (Ph-P=), phenylphosphoridene (PhPO=), 1,2-phenylene, vinylene (-CH=CH-), vinylidene ($CH_2$=C=), methylimido, oxygen (-O-), and sulfur (-S-). Of these, methylene, ethylene, ethylidene, and isopropylidene are preferred from the viewpoint of yield and ease of synthesis.

$M^2$ represents titanium, zirconium, or hafnium. Of these, hafnium is particularly preferred.

Specific examples of transition metal compounds represented by general formula (IX) include, but are not limited to, 1,2-ethanediyl(1-(4,7-diisopropylindenyl))(2-(4,7-diisopropylindenyl)hafnium dichloride, 1,2-ethanediyl (9-fluorenyl) (2-(4,7-diisopropylindenyl)hafnium dichloride, isopropylidene(1-(4,7-diisopropylindenyl))(2-(4,7-diisopropylindenyl)hafnium dichloride, 1,2-ethanediyl(1-(4,7-dimethylindenyl)) (2-(4,7-diisopropylindenyl) hafnium dichloride, 1,2-ethanediyl (9-fluorenyl) (2-(4,7-dimethylindenyl))hafnium dichloride, and isopropylidene(1-(4,7-dimethylindenyl)) (2-(4,7-diisopropylindenyl)hafnium dichloride. Examples also include titanium compounds and hafnium compounds that are structurally equivalent to these zirconium compounds.

Compound (A-3) is also a transition metal compound having two cross-linking groups, the compound serving as compound (A) of the aforementioned catalyst for forming an end vinyl group at high efficiency.

Examples of the aluminum oxy compound serving as compound (B-1) include a linear aluminoxane represented by general formula (IV)

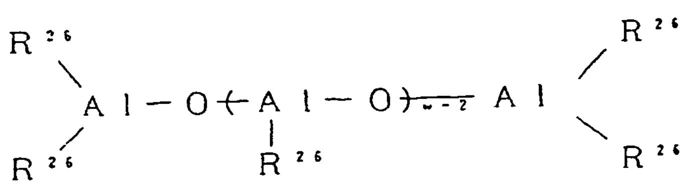

. . . (IV)

(wherein $R^{26}$ represents a halogen atom or a hydrocarbon group such as C1-C20, preferably C1-C12 alkyl group, an alkenyl group, an aryl group, or an arylalkyl group; "**w**" represents a average polymerization degree (integer) of generally 2 to 50, preferably 2 to 40; and a plurality of $R^{26}$s may be identical to or different from one another), and a cyclic aluminoxane represented by general formula (V):

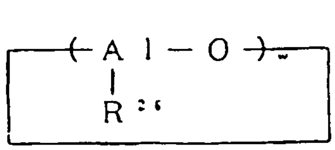

. . . (V)

(wherein $R^{26}$ and "**w**" have the same meanings as defined in general formula (IV)).

No particular limitation is imposed on the method for producing the above aluminoxanes, and reaction for production thereof may be performed in accordance with any known method. For example, a method including bringing an alkylaluminum into contact with a condensing agent such as water can be employed. Specifically, examples of the method include (1) a method including dissolving an organic aluminum compound in an organic solvent and bringing

the solution into contact with water; (2) a method including an addition of an organic aluminum compound during polymerization and an addition of water after polymerization; (3) a method including a reaction of an organic aluminum compound with crystal water contained in a metallic salt or water adsorbed in inorganic and organic matter; and (4) a method including a reaction of tetraalkyldialuminoxane with trialkylaluminum and further reacting water. The aluminoxanes may be toluene-insoluble species.

These aluminum oxy compounds may be used singly or in combination of two or more kinds.

No particular limitation is imposed on the compound (B-2), and any ionic compound can be used so long as the compound can be converted to a cation through reaction with the aforementioned transition metal compound. From the viewpoint of effective formation of polymerization active sites, particularly preferably used are the following compounds represented by the following general formulas (VI) and (VII):

$$([L^1\text{-}R^{27}]^{h+})_a([Z]^-)_b \quad \text{(VI)}$$

$$([L^2]^{h+})_a([Z]^-)_b \quad \text{(VII)}$$

(wherein $L^2$ represents $M^5$, $R^{28}R^{29}M^6$, $R^{30}{}_3C$, or $R^{31}M^6$; $L^1$ represents a Lewis base; $[Z]^-$ represents non-coordinating anion ( $[Z^1]^-$ or $[Z^2]^-$); $[Z^1]^-$ is an anion in which a plurality of groups are bonded to an element; i.e., $[M^4G^1G^2 \cdots G^f]$ (wherein $M^4$ is a Group 5 to 15 element in the Periodic Table, preferably a Group 13 to 15 element in the Periodic Table; each of $G^1$ to $G^f$ represents a hydrogen atom, a halogen atom, a C1-C20 alkyl group, a C2-C40 dialkylamino group, a C1-C20 alkoxy group, a C6-C20 aryl group, a C6-C20 aryloxy group, a C7-C40 alkylaryl group, a C7-C40 arylalkyl group, a C1-C20 halogen-substituted hydrocarbon group, a C1-C20 acyloxy group, an organic metalloid group, or a C2-C20 heteroatom-containing hydrocarbon group. At least two of the groups $G^1$ to $G^f$ may be linked to form a ring; and "**f**" represents an integer [(valence of center metal $M^4$) + 1]); $[Z^2]^-$ represents a conjugate base of a Broensted acid or a combination of a Broensted acid and a Lewis acid, having a logarithm (pKa) of reciprocal acid-dissociation constant of -10 or lower, or a conjugate base of a generally defined hyper strong acid; A Lewis base may be coordinated; $R^{27}$ represents a hydrogen atom, a C1-C20 alkyl group, a C6-C20 aryl group, an alkylaryl group, or an arylalkyl group; each of $R^{28}$ and $R^{29}$ represents a cyclopentadienyl group, a substituted cyclopentadienyl group, an indenyl group, or a fluorenyl group; $R^{30}$ represents a C1-C20 alkyl group, an aryl group, an alkylaryl group, or an arylalkyl group; $R^{31}$ represents a macroannular ligand such as tetraphenylporphyrin or phthalocyanine; "**h**" represents an integer of 1 to 3 as a valence of an ion $[L^1\text{-}R^{27}]$ or ion $[L^2]$; "**a**" is an integer of 1 or more; **b** = (**h** × **a**); $M^5$ includes elements belonging to Group 1 to 3, 11 to 13, and 17 in the Periodic Table; and $M^6$ represents an element belonging to Group 7 to 12 each in the Periodic Table).

Specific examples of $L^1$ include amines such as ammonia, methylamine, aniline, dimethylamine, diethylamine, N-methylaniline, diphenylamine, N,N-dimethylaniline, trimethylamine, triethylamine, tri-n-butylamine, methyldiphenylamine, pyridine, p-bromo-N,N-dimethylaniline, and p-nitro-N,N-dimethylaniline; phosphines such as triethylphosphine, triphenylphosphine, and diphenylphosphine; thioethers such as tetrahydrothiophene; esters such as ethyl benzoate; and nitriles such as acetonitrile and benzonitrile.

Specific examples of $R^{27}$ include hydrogen, a methyl group, an ethyl group, a benzyl group, and a trityl group. Specific examples of $R^{28}$ and $R^{29}$ include a cyclopentadienyl group, a methylcyclopentadienyl group, an ethylcyclopentadienyl group, and a pentamethylcyclopentadienyl group. Specific examples of $R^{30}$ include a phenyl group, a p-tolyl group, and a p-methoxyphenyl group. Specific examples of $R^{31}$ include tetraphenylporphine, phthalocyanine, allyl, and methallyl. Specific examples of $M^5$ include Li, Na, K, Ag, Cu, Br, I, and $I_3$. Specific examples of $M^6$ include Mn, Fe, Co, Ni, and Zn.

In $[Z^1]^-$, i.e., $[M^4G^1G^2 \cdots G^f]$, specific examples of $M^4$ include B, Al, Si, P, As, and Sb, with B and Al being preferred. Specific examples of $G^1$, $G^2$, ⋯ , and $G^f$ include dialkylamino groups such as a dimethylamino group and a diethylamino group; alkoxy or aryloxy groups such as a methoxy group, an ethoxy group, an n-butoxy group, and a phenoxy group; hydrocarbon groups such as a methyl group, an ethyl group, an n-propyl group, an isopropyl group, an n-butyl group, an isobutyl group, an n-octyl group, an n-eicosyl group, a phenyl group, a p-tolyl group, a benzyl group, a 4-t-butylphenyl group, and a 3,5-dimethylphenyl group; halogen atoms including a fluorine atom, a chlorine atom, a bromine atom, and an iodine atom; heteroatom-containing hydrocarbon groups such as a p-fluorophenyl group, a 3,5-difluorophenyl group, a pentachlorophenyl group, a 3,4,5-trifluorophenyl group, a pentafluorophenyl group, a 3,5-bis(trifluoromethyl)phenyl group, and a bis(trimethylsilyl)methyl group; and organic metalloid groups such as a pentamethylantimony group, a trimethylsilyl group, a trimethylgermyl group, a diphenylarsine group, a dicyclohexylantimony group, and diphenylboron.

Specific examples of $[Z^2]^-$, which is a non-coordinating anion; i.e., a conjugate base of a Broensted acid or a

combination of a Broensted acid and a Lewis acid, having a pKa of -10 or lower, include trifluoromethanesulfonate anion $(CF_3SO_3)^-$, bis(trifluoromethanesulfonyl)methyl anion, bis(trifluoromethanesulfonyl)benzyl anion, bis(trifluoromethanesulfonyl)amide, perchlorate anion $(ClO_4)^-$, trifluoroacetate anion $(CF_3CO_2)^-$, hexafluoroantimonate anion $(SbF_6)^-$, fluorosulfonate anion $(FSO_3)^-$, chlorosulfonate anion $(ClSO_3)^-$, fluorosulfonate anion/antimony pentafluoride $(FSO_3/SbF_5)^-$, fluorosulfonate anion/arsenic pentafluoride $(FSO_3/AsF_5)^-$, and trifluoromethanesulfonic acid/antimony pentafluoride $(CF_3SO_3/SbF_5)^-$.

Specific examples of such compounds serving as compound (B-2) include triethylammonium tetraphenylborate, tri-n-butylammonium tetraphenylborate, trimethylammonium tetraphenylborate, tetraethylammonium tetraphenylborate, methyl (tri-n-butyl) ammonium tetraphenylborate, benzyl(tri-n-butyl)ammonium tetraphenylborate, dimethyldiphenylammonium tetraphenylborate, triphenyl(methyl)ammonium tetraphenylborate, trimethylanilinium tetraphenylborate, methylpyridinium tetraphenylborate, benzylpyridinium tetraphenylborate, methyl(2-cyanopyridinium) tetraphenylborate, triethylammonium tetrakis (pentafluorophenyl) borate, tri-n-butylammonium tetrakis(pentafluorophenyl)borate, triphenylammonium tetrakis(pentafluorophenyl)borate, tetra-n-butylammonium tetrakis(pentafluorophenyl)borate, tetraethylammonium tetrakis(pentafluorophenyl)borate, benzyl(tri-n-butyl)ammonium tetrakis(pentafluorophenyl) borate, methyldiphenylammonium tetrakis(pentafluorophenyl)borate, triphenyl(methyl)ammonium tetrakis(pentafluorophenyl)borate, methylanilinium tetrakis(pentafluorophenyl)borate, dimethylanilinium tetrakis(pentafluorophenyl)borate, trimethylanilinium tetrakis(pentafluorophenyl)borate, methylpyridinium tetrakis(pentafluorophenyl)borate, benzylpyridinium tetrakis(pentafluorophenyl)borate, methyl(2-cyanopyridinium) tetrakis(pentafluorophenyl)borate, benzyl (2-cyanopyridinium) tetrakis(pentafluorophenyl)borate, methyl(4-cyanopyridinium) tetrakis(pentafluorophenyl)borate, triphenylphosphonium tetrakis(pentafluorophenyl)borate, dimethylanilinium tetrakis(bis(3,5-ditrifluoromethyl)phenyl) borate, ferrocenium tetraphenylborate, silver tetraphenylborate, trityl tetraphenylborate, tetraphenylporphyrinmanganese tetraphenylborate, ferrocenium tetrakis(pentafluorophenyl)borate, (1,1'-dimethylferrocenium) tetrakis(pentafluorophenyl)borate, decamethylferrocenium tetrakis(pentafluorophenyl)borate, silver tetrakis(pentafluorophenyl)borate, trityl tetrakis(pentafluorophenyl)borate, lithium tetrakis(pentafluorophenyl)borate, sodium tetrakis(pentafluorophenyl) borate, tetraphenylporphyrinmanganese tetrakis(pentafluorophenyl)borate, silver tetrafluoroborate, silver hexafluorophosphate, silver hexafluoroarsenate, silver perchlorate, silver trifluoroacetate, and silver trifluoromethanesulfonate.

The ionic compound (B-2) which can be converted to a cation through reaction with the transition metal compound (A) may be used singly or in combination of two or more kinds.

As compound (B-3), clay, clay mineral, or an ion-exchangeable layered compound is employed. The term "clay" refers to a substance, which is in the form of mass of hydrous silicate salt mineral particles; which exhibits plasticity upon kneading with an appropriate amount of water and rigidity when dried; and which sinters by firing at high temperature. The term "clay mineral" refers to a hydrous silicate salt, which is a predominant component of clay. The term "ion-exchangeable layered compound" refers to a compound having a crystal structure in which crystal planes formed based on force such as ion bond are stacked in parallel with a weak binding strength between planes and including exchangeable ions. Most clay mineral species are formed of an ion-exchangeable layered compound. In addition to naturally occurring ion-exchangeable layered compounds, those artificially synthesized may also be employed. Examples of ion-exchangeable layered compounds include ionic crsytalline compounds having a layered crystal structure type; e.g., hexagonal closest packing type, antimony type, cadmium chloride type, cadmium iodide type, etc.

Specific examples of compound (B-3) include kaolin, bentonite, Kibushi clay, Gairome clay, allophane, hisingerite, pyrophyllite, talc, mica-group minerals, montmorillonite-group minerals, vermiculite, chlorite-group minerals, palygorskite, nacrite, dickite, and halloysite. The compound (B-3) preferably has a porosity (radius ≥20Å) of 0.1 milliliter/g or more, particularly preferably 0.3 to 5 milliliter/g or more as measured in accordance with a mercury penetration method. Chemical treatment is also preferred, from the viewpoint of removal of impurities contained in clay and changes in structure and function.

The term "chemical treatment" refers to a surface treatment for removing impurities adhered on the surface as well as a treatment that permits modification of the crystal structure of clay. Specifically, acid treatment, alkali treatment, salt treatment, organic material treatment, etc. are included.

Acid treatment removes impurities present on the surface and increases surface area by eluting cations such as aluminum, iron, and magnesium ions included in the crystal structure. Alkali treatment breaks the crystal structure of clay, to thereby change the clay structure. Salt treatment and organic material treatment form an ion complex, a molecular complex, an organic complex, etc., whereby surface area, interlayer distance, etc. can be modified. Through employment of ion exchange ability, exchangeable ions present in an interlayer space can be replaced by bulky ions, providing an interlayer substance having an increased interlayer distance. In addition, polymerization reaction field where a predominant catalyst is present can be provided in an interlayer space.

The aforementioned compound (B-3) may be used without any further treatment. Alternatively, water may newly adsorb to the compound or the compound may be heated for dehydration. Such treated compounds may also be used.

The compound (B-3) is preferably clay or clay mineral, most preferably montmorillonite.

The compound (B-3) is preferably treated with a silane compound and/or an organic aluminum compound. Through the treatment, activity of the component may be enhanced. Examples of the silane compound include trialkylsilyl chlorides such as trimethylsilyl chloride and triethylsilyl chloride; dialkylsilyl dichlorides such as dimethylsilyl dichloride, diethylsilyl dichloride, and diisopropylsilyl dichloride; and alkylsilyl trichlorides such as methylsilyl trichloride, ethylsilyl trichloride, and isopropylsilyl trichloride.

No particular limitation is imposed on the organic aluminum compound for use in treatment of the compound (B-3). For example, a linear aluminoxane represented by the aforementioned general formula (IV), a cyclic aluminoxane represented by the aforementioned general formula (V), an associated product of cyclic aluminoxane, triethylaluminum, and triisobutylaluminum are preferably used.

In the polyolefin copolymer serving as component (B) which is to be blended as a modifier with the propylene polymer composition of the present invention, the propylene polymer segment contained in the chemically linked copolymer preferably has a melting point of 130°C or higher, more preferably 135°C or higher. When a propylene polymer composition is formed from a polyolefin copolymer as component (B) containing a propylene polymer segment having a melting point of 130°C or higher, high rigidity of the propylene polymer composition can be maintained.

In order to attain a melting point of 130°C or higher about the propylene polymer segment, highly regulated stereostructure of the propylene polymer is essential. This can be attained by the use of the olefin polymerization catalyst mentioned herein below.

The melting point (Tm) of polyolefin copolymer is determined by means of.a differential scanning calorimeter.

In the polyolefin copolymer serving as component (B) of the present invention, the ethylene copolymer segment contained in the chemically linked copolymer is preferably a copolymer formed from ethylene and a C3-C20 α-olefin, more preferably a copolymer formed from ethylene and a C3-C12 α-olefin.

Examples of the C3-C20 α-olefin include propylene, butene-1, pentene-1, 4-methyl-pentene-1, hexene-1, octene-1, decene-1, dodecene-1, tetradecene-1, hexadecene-1, octadecene-1, and eicosene-1. These olefins may be used singly or in combination of two or more kinds.

A polyolefin copolymer as component (B) formed from a copolymer containing such an ethylene copolymer segment has greatly enhanced impact strength at low temperature.

More preferably, the polyolefin copolymer serving as component (B) contains a copolymer in which an ethylene copolymer segment and a propylene polymer segment are graft-copolymerized.

The term "graft copolymer" refers to a copolymer in which a main chain and side chains are chemically linked. In the present invention, the graft copolymer preferably has a structure in which the main chain is formed of a propylene copolymer and the side chains are formed of an ethylene copolymer or a structure in which the main chain is formed of an ethylene copolymer and the side chains are formed of a propylene polymer.

The graft copolymer can be produced through either a method (1) comprises copolymerization by the use of a macro monomer having an end vinyl group or a method (2) comprises linking of side chains and a main chain by the use of a diene. When method (1) is employed, a metallocene catalyst for synthesizing an end vinyl group at high efficiency can be used. When method (2) is employed, one double bond of a diene such as 1,5-hexadiene, 1,7-octadiene, 1,9-decadiene, norbonadiene, or divinylbenzene is caused to be copolymerized, and the other double bond thereof serves as a reaction site for synthesizing the graft copolymer.

The end vinyl group in the method (1) and the reactive double bond in the method (2) are each copolymerized with monomers through simultaneous or sequential copolymerization.

When the graft copolymer is produced, a combination method of the aforementioned methods (1) and (2) can be employed. In this case, a macro monomer containing an end vinyl group is synthesized in the presence of a diene and simultaneously or sequentially, copolymerization is carried out.

When a graft copolymer is produced through copolymerization by the use of the macro monomer employed in the method (1), in one specific manner, ethylene and an α-olefin are reacted in the presence of an olefin polymerization catalyst, to thereby form a reactive macro monomer, and the macro monomer is polymerized with propylene in the presence of an olefin polymerization catalyst, to thereby produce a desired graft copolymer at high efficiency.

No particular limitation is imposed on the olefin polymerization catalyst, and a variety of catalysts can be used. Among them, the below-described metallocene catalysts formed of a transition metal compound and a compound that can form an ionic complex through reaction with the transition metal compound are preferably used. Typical examples of the aforementioned transition metal compound include Group 4 transition metal compounds in the Periodic Table capable of regulating stereostructure of polymer and having a ligand which is formed of two substituted indenyl groups that are cross-linked at the 5-membered portions via one or two cross-linking groups. Examples of preferred Group 4 transition metals in the Periodic Table include titanium, zirconium, and hafnium.

Examples of employable Group 4 transition metal compounds in the Periodic Table having an indenyl skeleton include (i) Hoechst type or BASF type complexes and the aforementioned (ii) double-bridged complexes.

Examples of the aforementioned (i) Hoechst type or BASF type complexes include rac-dimethylsilylene-bis(2-methyl-4-phenylindenyl)zirconium dichloride, rac-dimethylsilylene-bis(2-methyl-4,5-benzoindenyl)zirconium dichloride, rac-ethylenebisindenylzirconium dichloride, and similar titanium or hafnium compounds corresponding to the zirconium compounds. Examples of the aforementioned (ii) double-bridged complexes include (1,2'-ethylene)(2,1'-ethylene)-bis(4,7-dimethylindenyl)zirconium dichloride, (1,2'-ethylene)(2,1'-ethylene)-bis(4-phenylindenyl)zirconium dichloride, the aforementioned double-bridged transition metal compounds, compounds (A-1) and (A-2), and similar titanium or hafnium compounds corresponding to the zirconium compounds.

Examples of the compound which can form an ionic complex through reaction with the transition metal compound include aluminum oxy compounds, ionic compounds formed of a cation and an anion in which a plurality of groups are bonded to an element, and Lewis acids. Of these, aluminum oxy compounds are preferred, with aluminoxanes being particularly preferred. Examples of aluminoxanes include methylaluminoxane, ethylaluminoxane, n-propylaluminoxane, isobutylaluminoxane, methyl-ethylaluminoxane, methyl-n-propylaluminoxane, methyl-isopropylaluminoxane, ethyl-n-propylaluminoxane, ethyl-isopropylaluminoxane, and mixtures containing two or more these aluminoxanes. In addition, examples also include the aforementioned compounds (B-1) to (B-3) .

In order to bond side chains and a main chain by the use of a diene, the following methods (A) and (B) are employed. In method (A), a macro monomer is synthesized through the aforementioned ethylene copolymer segment production method (2); unreacted monomers are sufficiently removed; and propylene is fed. In method (B), propylene and a diene are polymerized in the presence of a catalyst employed in the aforementioned ethylene copolymer segment production method (1) or (2); and at least one ethylene specie selected from among C3-C20 $\alpha$-olefins, cyclic olefins, styrene and styrene derivatives is copolymerized. In the case of method (B), the catalyst is preferably in the catalyst-on-carrier form. However, the form of the catalyst is not limited to the above mode.

No particular limitation is imposed on the polymerization method, and any method such as slurry polymerization, vapor-phase polymerization, bulk polymerization, solution polymerization, or suspension polymerization may be employed. Upon polymerization, the molecular weight of the produced polymer can be controlled through the use of a generally employed chain-transfer agent such as hydrogen.

When a polymerization solvent is used in some polymerization methods such as solution polymerization and slurry polymerization, no particular limitation is imposed on the solvent, and any solvent can be used so long as the solvent is inert with respect to the relevant polymerization. Examples of the solvent include aromatic hydrocarbons such as benzene, toluene, and xylene; aliphatic hydrocarbons such as pentane, hexane, heptane, and octane; and alicyclic hydrocarbons such as cyclopentane and cyclohexane. Generally, the polymerization temperature is appropriately selected in a range of 0 to 250°C depending on the polymerization method employed, and generally, the polymerization pressure is appropriately selected from a range of 0.01 to 100 kg/cm$^2$ G, preferably 0.2 to 60 kg/cm$^2$ G. The polymerization time is generally about one minute to about 10 hours.

The propylene polymer composition of the present invention can be produced by mixing a component (A) which is a propylene block copolymer or a composition containing a propylene polymer and a rubber ingredient and a component (B) which is a polyolefin copolymer having specific physical properties by means of a Henschel mixer or a similar apparatus; and melt-kneading the mixture by means of an extruder. When the propylene polymer, rubber ingredient, and polyolefin copolymer are mixed, three components may be mixed simultaneously. Alternatively, a mixture of the rubber ingredient and polyolefin copolymer prepared in advance may be mixed with the propylene polymer.

The blending ratio between the component (A), which is a propylene block copolymer or a composition containing a propylene polymer and a rubber ingredient, and the component (B), which is a polyolefin copolymer, is such that the component (B) is preferably added in an amount of 0.1 to 50 wt.% to the component (A). When the ratio is less than 0.1 wt.%, the effect of enhancing physical properties is poor, whereas when the ratio exceeds 50 wt.%, physical properties which block polypropylene per se has may be impaired.

The molded product formed of the propylene polymer composition of the present invention has improved impact resistance and elongation at break. Therefore, the molded product finds remarkable utility in various fields; e.g., injection-molded products requiring excellent physical properties such as impact strength and elongation at break while high rigidity is maintained (e.g., exterior materials for household electric appliances and automobiles) and materials having excellent moldability, particularly for large-scale blow molding or extrusion-expansion molding while the above physical properties are maintained.

In other words, the propylene polymer composition of the present invention has satisfactory properties in a molten state; e.g., tension, viscoelasticity, flowability, and excellent processability. Thus, the composition is suitably converted to injection-molded products, large-scale-blow-molded products, extrusion-expansion-molded products, etc.

The polyolefin copolymer of the present invention is the aforementioned component (B) in which a propylene polymer segment and an ethylene copolymer segment are chemically linked. Thus, the polyolefin copolymer is suitably used for producing molded products, particularly blow-molded products, extrusion-expansion-molded products, etc., the products having satisfactory properties in a molten state; e.g., tension, viscoelasticity, flowability, and excellent processability, as well as physical properties equal to or superior to those of conventional propylene copolymers.

As described above, by adding the polyolefin copolymer of the present invention to a propylene copolymer

or a composition containing a propylene polymer and a rubber ingredient, impact strength of the product is enhanced while rigidity thereof is maintained.

The present invention will next be described in more detail by way of Examples, which should not be construed as limiting the invention thereto.

In Examples, determination of physical properties and evaluation of mechanical properties were carried out in the following manner.

(1) Measurement of DSC (sample: polyolefin copolymer)

A differential scanning calorimeter (DSC-7, product of Perkin-Elmer Co., Ltd.) was used. A sample (10 mg) was heated from 40°C to 220°C with a temperature elevation rate of 320°C/minute, and the sample was maintained for three minutes. Subsequently, the sample was cooled to 0°C with a cooling rate of 10°C/minute, and maintained at 0°C for three minutes. The sample was heated again to 220°C with a temperature elevation rate of 10°C/minute. The value of the peak top attributed to fusion was evaluated as melting point (Tm).

(2) Determination of an intrinsic viscosity [η] (sample: polyolefin copolymer)

An intrinsic viscosity of the polyolefin copolymer was measured at 135°C in decalin solvent, by the use of an automatic viscometer (model VMR-053, product of Rigosha Co., Ltd.).

(3) Temperature rising elution fractionation chromatography (sample: polyolefin copolymer)

Polyolefin copolymer was completely dissolved in o-dichlorobenzene at 140°C, to thereby prepare a sample solution. The solution was introduced into a temperature rising elution fractionation (TREF) chromatography column regulated at the temperature of 135°C. The column temperature was gradually lowered to 0°C with 5°C/hr, whereby the sample was adsorbed by a column filler. After the column had been maintained at 0°C for 30 minutes, o-dichlorobenzene was passed through the column, and the column was maintained at 0°C for 10 minutes, whereby a component which was not adsorbed by the column filler was eluted. Thereafter, the column temperature was elevated to 135°C with a rate of 40°C/hr, while o-dichlorobenzene was passed through the column, whereby polymer components were successively eluted. The elution curve was obtained by determining the concentration of each fraction of the eluted polymer.

(Measurement apparatus)

TREF column: Stainless steel column (4.6 mϕ × 150 mm, product of GL Sciences Inc.)
Flowcell: KBr cell (optical path length 1 mm, product of GL Sciences Inc.)
Liquid feeding pump: SSC-3100 (Product of Senshu Science Co., Ltd.)
Valve oven: Model 554 (product of GL Sciences Inc.)
TREF oven: product of GL Sciences Inc.
Dual system temperature controller: REX-C100 (product of Rigaku Kogyo Company)
Concentration detector: Infrared detector for liquid chromatography (MIRAN 1A CVF, product of FOXBORO Company)

(Measuring conditions)

Solvent: o-dichlorobenzene
Sample concentration: 7.5 g/liter
Injection amount: 500 μ liter
Flow rate: 2.0 milliliter/min
Column filler: Chromosorb P (30/60 mesh)

(4) GPC measurement (sample: macro monomers and polyolefin copolymer)

The peak-top molecular weight (Mp) of a macro monomer (ethylene copolymer segment), the weight average

molecular weight (Mw) and the molecular weight distribution (Mw/Mn) of polyolefin copolymer were determined under the following conditions. The molecular weights were reduced to polyethylene.

(Measurement apparatus)

Main body: Waters ALC/GPC 150C
Column: GMHHR-H(S) × 2 (product of Tosoh corporation)

(Measurement conditions)

Temperature: 145°C
Solvent: 1,2,4-trichlorobenzene
Flow rate: 1.0 milliliter/min

(5) $^{13}$C-NMR measurement (sample: components eluted at 101°C or higher through TREF, macro monomers, polyolefin copolymer)

Measurement was performed in accordance with the following description.

Apparatus: NMR apparatus (type: JNM-EX400, product of JEOL Ltd.)
Nuclear to be observed: $^{13}$C (100.4 MHz)
Method: $^{1}$H complete decoupling method
Concentration: about 200 mg/3 ml (6.7 × 10 kg/m$^3$) (10 ϕ test tube)
Solvent: mixed solvent; 1,2,4-trichlorobenzene and heavy benzene (90:10 by vol.)
Temperature: 130°C
Pulse width: 45°
Pulse repetition time: 4 seconds
Integration: 1,000 times

(6) Tensile modulus (sample: propylene copolymer composition)

Test pieces were prepared through injection molding of a propylene copolymer composition, and each test pieces was subjected to a tensile test in accordance with JIS K 7113.

Test piece (by the use of dumbbells No. 2): 1 mm in thickness
Cross-head speed: 50 mm/min
Load cell: 100 kg

(7) Izod impact strength (with notch) (sample: propylene copolymer composition)

Test pieces were prepared through injection molding of a propylene copolymer composition, and each test pieces (thickness: 3 mm) was subjected to an impact test (in an atmosphere at the temperature of 23°C) in accordance with JIS K 7110.

[Referential Example]

A linear high-density polyethylene (U.S. Department of Commerce National Institute of Standards and Technology, SRM 1475) was subjected to the aforementioned temperature rising elution fractionation chromatography. Through the analysis, the highest elution temperature was found to be 100.6°C.

[Example 1]

<Synthesis of macro monomer>

A pressure-resistant autoclave made of stainless steel having a volume of 2 liter and equipped with an agitator was heated to 80°C, and the inside of the autoclave was sufficiently dried under reduced pressure. The internal pressure of the autoclave was increased to atmospheric pressure by the use of dry nitrogen, and the internal temperature was reduced to room temperature. Under dry nitrogen flow, 1.0 liter of dried heptane, $5 \times 10^{-3}$ mol as reduced to Aluminum atom of MAO (methylaluminoxane), and $10.0 \times 10^{-6}$ mol of heptane slurry made from bis(pentamethylcyclopentadienyl) hafnium dichloride ($Cp^*{}_2HfCl_2$) were fed to the autoclave, and a mixed gas of ethylene (1.2 NL/min) and propylene (10.0 NL/min) was passed through the autoclave at 25°C such that the total pressure was controlled to 0.6 MPa G, to thereby perform polymerization for 60 minutes.

After completion of reaction, unreacted monomers were removed by releasing pressurization, and thoroughly removed through purging with nitrogen. The catalyst compounds were deactivated with a small amount of methanol. The resultant reaction mixture was soluble in heptane.

The collected reaction mixture was treated with dilute hydrochloric acid/methanol/water for removing ash contents. Specifically, the mixture was allowed to stand, and the supernatant was removed. The produced mixture was washed three times with methanol, and the solvent was completely distilled off from the formed precipitates by means of an evaporator, to thereby collect 400 g of an ethylene-co-propylene macro monomer.

The produced macro monomer was found to have an ethylene content of 60.7 mol% and a GPC peak-top molecular weight (Mp) of 14,900.

<Copolymerization of propylene and ethylene-co-propylene macro monomer>

The produced macro monomer (ethylene copolymer segment) was dissolved in heptane such that the concentration was adjusted to 0.4 g/ml. The solution underwent nitrogen bubbling for 24 hours, to thereby remove water and oxygen. Since the solution was concentrated through bubbling, heptane was further added to the solution, whereby the concentration was adjusted to 0.4 g/ml.

A pressure-resistant autoclave made of stainless steel having a volume of 10 liter and equipped with an agitator was heated to 80°C, and the inside of the autoclave was sufficiently dried under reduced pressure. The internal pressure of the autoclave was increased to atmospheric pressure by the use of dry nitrogen, and the internal temperature was reduced to room temperature. Under dry nitrogen flow, 5.5 liter of dried heptane, $5 \times 10^{-3}$ mol of TIBA (triisobutylaluminum) and 600 ml (240 g as macro monomer) of the above macro monomer solution were fed to the autoclave, and the mixture was stirred for 10 minutes at 25°C. Subsequently, $30 \times 10^{-3}$ mol as reduced to Aluminum atom of MAO (methylaluminoxane) and $3 \times 10^{-6}$ mol of heptane slurry made of rac-dimethylsilylenebis(2-methyl-4-phenyl-indenyl) zirconium dichloride [rac-$Me_2Si(2\text{-}Me\text{-}4\text{-}Ph\text{-}Ind)_2ZrCl_2$] were fed to the autoclave, and propylene was continuously fed to the autoclave at 30°C such that the total pressure was controlled to 0.5 MPa G, to thereby perform polymerization for 30 minutes.

After completion of reaction, unreacted propylene was thoroughly removed by releasing pressurization, and the catalyst compounds were deactivated with a small amount of methanol. The catalyst components were further deactivated with allowing the reaction mixture to stand in air with stirring. The reaction mixture was filtrated, and after the addition of 4 liter of heptane having a temperature of 50°C, was washed with stirring for 10 minutes, and then, the mixture was filtrated. The set of washing with stirring and filtration was performed three times. Thereafter, the filtrated mixture was dried under air and then in vacuum at 80°C for four hours, to thereby yield 527 g of polyolefin copolymer (graft copolymer).

The polyolefin copolymer was subjected to temperature rising elution fractionation chromatography, and a fraction eluted at 101°C or higher was analyzed through $^{13}C$-NMR. In the $^{13}C$-NMR spectrum, peaks attributed to ethylene chains were observed. The triple chain peaks satisfied the following equation: $EP^*E \times PE^*E/(PP^*E \times PE^*P) = 2.39$.

<Production of propylene polymer composition and evaluation of physical properties>

To a mixture of propylene block copolymer (J763HP, available from Idemitsu Petrochemical Co., Ltd.) in an amount of 2,935 g and the above-produced polyolefin copolymer in an amount of 65 g, Irgaphos 168 (available from Ciba Specialty Chemicals K. K.) in an amount of 1,000 ppm and Irganox 1010 (available from Ciba Specialty Chemicals K. K.) in an amount of 1,000 ppm were added as additives. The resultant mixture was melt-kneaded by means a kneader, to thereby produce polymer pellets.

The pellets were injection-molded by means of an injection molding machine, to thereby prepare test pieces

which were evaluated in terms of physical properties.

Physical properties of the produced polyolefin copolymers and evaluation of physical properties of the injection-molded products are shown in Table 1.

[Example 2]

The procedure of Example 1 was repeated, except that the amount of macro monomer solution fed during the copolymerization of propylene and an ethylene-co-propylene macro monomer was changed from 600 ml to 200 ml (80 g as macro monomer), to thereby yield 368 g of polyolefin copolymer (graft copolymer).

The produced polyolefin copolymer was subjected to temperature rising elution fractionation chromatography, and a fraction eluted at 101°C or higher was analyzed through $^{13}C$-NMR. In the $^{13}C$ -NMR spectrum, peaks attributed to ethylene chains were observed. The triple chain peaks satisfied the following equation: EP*E×PE*E/(PP*E×PE*P) = 2.45.

In a manner similar to that of Example 1, the produced polyolefin copolymer was pelletized, and the pellets were injection-molded by means of an injection molding machine, to thereby prepare test pieces which were evaluated in terms of physical properties.

Physical properties of the polyolefin copolymers and evaluation of physical properties of the injection-molded products are shown in Table 1.

[Comparative Example 1]

The procedure of Example 1 was repeated, except that a random polypropylene was used instead of polyolefin copolymer.

Physical properties of the random polypropylene and evaluation of physical properties of the injection-molded products are shown in Table 1.

Table 1

| | Example 1 | Example 2 | Comp. Ex. 1 |
|---|---|---|---|
| (Polyolefin copolymers (B)) | | | (Random PP) |
| Ethylene content (mol%) | 3.4 | 0.4 | 11.8 |
| Wt. av. molecular weight (Mw) | 486,000 | 586,000 | 61,300 |
| Molecular weight distribution (Mw/Mn) | 2.29 | 2.27 | 4.12 |
| Intrinsic viscosity η (dl/g) | 3.06 | 3.01 | 3.51 |
| Melting point Tm (°C) | 148.8 | 149.4 | 108.2 |
| (Propylene polymer compositions) | | | |
| Propylene block copolymer (A) | J763HP | J763HP | J763HP |
| Amount of (A) used (g) | 2,935 | 2,935 | 2,935 |
| Amount of (B) used (g) | 65 | 65 | 65 |
| (Injection-molded products) | | | |
| Tensile modulus (MPa) | 1,430 | 1,440 | 1,320 |
| Izod impact strength (kJ/$m^2$) | 16.2 | 14.8 | 10.8 |

The results of the above Examples indicate that molded products formed from the propylene polymer compositions of Example 1 and 2 containing the polyolefin copolymer of the present invention exhibit improved tensile modulus and Izod impact strength as compared with the molded product of Comparative Example 1.

[Example 3]

<Synthesis of macro monomer>

A pressure-resistant autoclave made of stainless steel having a volume of 2 liter and equipped with an agitator

was heated to 80°C, and the inside of the autoclave was sufficiently dried under reduced pressure. The internal pressure of the autoclave was increased to atmospheric pressure by the use of dry nitrogen, and the internal temperature was reduced to room temperature. Under dry nitrogen flow, 1.0 liter of dried heptane, $5 \times 10^{-3}$ mol as reduced to Aluminum atom of MAO (methylaluminoxane) and $10.0 \times 10^{-6}$ mol of heptane slurry made from bis(pentamethylcyclopentadienyl) hafnium dichloride ($Cp^*_2HfCl_2$) were fed to the autoclave, and a mixture of ethylene (1.0 NL/min) and propylene (10 NL/min) was continuously passed through the autoclave at 25°C such that the total pressure was controlled to 0.5 MPa G, to thereby perform polymerization for 60 minutes.

After completion of reaction, unreacted monomers were removed by releasing pressurization, and thoroughly removed through purging with nitrogen. The catalyst compounds were deactivated with a small amount of methanol. The resultant reaction mixture was soluble in heptane.

The collected reaction mixture was treated with dilute hydrochloric acid/methanol/water for removing ash contents. Specifically, the mixture was allowed to stand, and the supernatant was removed. The thus-produced mixture was washed three times with methanol, and the solvent was completely distilled off from the formed precipitates by means of an evaporator, to thereby collect 232 g of an ethylene-propylene macro monomer.

<Copolymerization of propylene and ethylene-co-propylene macro monomer>

The produced macro monomer was dissolved in heptane such that the concentration was adjusted to 0.4 g/ml. The solution underwent nitrogen bubbling for 24 hours, to thereby remove water and oxygen. Since the solution was concentrated through bubbling, heptane was further added to the solution, whereby the concentration was adjusted to 0.4 g/ml.

A pressure-resistant autoclave made of stainless steel having a volume of 10 liter and equipped with an agitator was heated to 80°C, and the inside of the autoclave was sufficiently dried under reduced pressure. The internal pressure of the autoclave was increased to atmospheric pressure by the use of dry nitrogen, and the internal temperature was reduced to room temperature. Under dry nitrogen flow, 6.0 liter of dried heptane, $5 \times 10^{-3}$ mol of TIBA (triisobutylaluminum) and 200 ml (80 g as macro monomer) of the above macro monomer solution were fed to the autoclave, and the mixture was stirred for 10 minutes at 25°C. Subsequently, $15 \times 10^{-3}$ mol as reduced to Aluminum atom of MAO (methylaluminoxane) and $3 \times 10^{-6}$ mol of heptane slurry made from rac-dimethylsilylenebis(2-methyl-4-phenyl-indenyl) zirconium dichloride [rac-$Me_2Si(2\text{-}Me\text{-}4\text{-}Ph\text{-}Ind)_2ZrCl_2$] were fed to the autoclave, and propylene was continuously fed to the autoclave at 50°C such that the total pressure was controlled to 0.5 MPa (gauge), to thereby perform polymerization for 45 minutes.

After completion of reaction, unreacted propylene was removed by releasing pressurization, and completely removed through purging with nitrogen. Subsequently, the catalyst compounds were deactivated with a small amount of methanol. The reaction mixture was filtrated, and after the addition of 4 liter of heptane having a temperature of 50°C, was washed with stirring for 10 minutes, and then, the mixture was filtrated. The set of washing with stirring and filtration was performed three times. Thereafter, the mixture was dried under air and then in vacuum at 80°C for four hours, to thereby yield 354 g of polyolefin copolymer.

The polyolefin copolymer was subjected to temperature rising elution fractionation chromatography, and a fraction eluted at 101°C or higher was analyzed through $^{13}C$-NMR. In the $^{13}C$-NMR spectrum, peaks attributed to ethylene chains were observed. The triple chain peaks satisfied the following equation: $EP^*E \times PE^*E/(PP^*E \times PE^*P) = 6.61$.

Physical properties of the polyolefin copolymer are shown in Table 2.

<Evaluation of physical properties of a blend>

To a mixture of propylene block copolymer (J763HP, available from Idemitsu Petrochemical Co., Ltd.) in an amount of 2,850 g and the above-produced polyolefin copolymer in an amount of 150 g, similar additives as employed in Example 1 were added in similar amounts. The resultant mixture was melt-kneaded by means a kneader, to thereby produce polymer pellets. The pellets were injection-molded by means of an injection molding machine, to thereby prepare test pieces which were evaluated in terms of physical properties. The results are shown in Table 2.

[Example 4]

The procedure of Example 3 was repeated, except that polymerization was performed at 50°C and the gas mixture formed of ethylene (2.0 NL/min) and propylene (10.0 NL/min) was used, to thereby yield 389 g of a macro monomer. A polyolefin copolymer (347 g) was produced from the macromonomer. Test results are shown in Table 2.

Table 2

| | Example 3 | Example 4 |
|---|---|---|
| (Macromonomers) | | |
| Ethylene content (mol%) | 72 | 52 |
| Peak top molecular weight (Mp) | 14,900 | 3,550 |
| Wt. av. molecular weight (Mw) | 25,200 | 7,100 |
| (Polyolefin copolymers (B)) | | |
| Wt. av. molecular weight (Mw) | 456,000 | 389,000 |
| Intrinsic viscosity η (dl/g) | 2.75 | 2.57 |
| Melting point Tm (°C) | 148.9 | 149.1 |
| (Propylene polymer composition) | | |
| Propylene block copolymer (A) | J763HP | J763HP |
| Amount of (A) used (g) | 2,850 | 2,850 |
| Amount of (B) used (g) | 150 | 150 |
| (Injection-molded products) | | |
| Tensile modulus (MPa) | 1,340 | 1,310 |
| Izod impact strength ($kJ/m^2$) | 60.9 | 12.4 |

[Example 5]

<Synthesis of macro monomer>

A pressure-resistant autoclave made of stainless steel having a volume of 2 liter and equipped with an agitator was heated to 80°C, and the inside of the autoclave was sufficiently dried under reduced pressure. The internal pressure of the autoclave was increased to atmospheric pressure by the use of dry nitrogen, and the internal temperature was reduced to room temperature. Under dry nitrogen flow, 1.0 liter of dried heptane, $5 \times 10^{-3}$ mol as reduced to Aluminum atom of MAO (methylaluminoxane) and $10.0 \times 10^{-6}$ mol of heptane slurry made from bis(pentamethylcyclopentadienyl) hafnium dichloride ($Cp^*_2HfCl_2$) were fed to the autoclave, and a mixture of ethylene ($54 \times 10^{-3}$ mol/min) and propylene ($446 \times 10^{-3}$ mol/min) was continuously passed through the autoclave at 25°C such that the total pressure was controlled to 0.7 MPa G, to thereby perform polymerization for 60 minutes.

After completion of reaction, unreacted monomers were removed by stopping pressurization, and thoroughly removed through purging with nitrogen. The catalyst compounds were deactivated with a small amount of methanol. The resultant reaction mixture was soluble in heptane.

The collected reaction mixture was treated with dilute hydrochloric acid/methanol/water for removing ash contents. Specifically, the mixture was allowed to stand, and the supernatant was removed. The produced mixture was washed three times with methanol, and the solvent was completely distilled off from the formed precipitates by means of an evaporator, to thereby collect 375 g of an ethylene-propylene macro monomer.

The produced macro monomer was found to have an ethylene content of 71.9 mol% and a GPC peak-top molecular weight (Mp) of 11,500.

<Copolymerization of propylene and ethylene-co-propylene macro monomer>

The produced macro monomer (ethylene copolymer segment) was dissolved in heptane such that the concentration was adjusted to 0.4 g/ml. The solution underwent nitrogen bubbling for 24 hours, to thereby remove water and oxygen. Since the solution was concentrated through bubbling, heptane was further added to the solution, whereby the concentration was adjusted to 0.4 g/ml.

A pressure-resistant autoclave made of stainless steel having a volume of 10 liter and equipped with an agitator was heated to 80°C, and the inside of the autoclave was sufficiently dried under reduced pressure. The internal pressure of the autoclave was increased to atmospheric pressure by the use of dry nitrogen, and the internal temperature was reduced to room temperature. Under dry nitrogen flow, 6.0 liter of dried heptane, $5 \times 10^{-3}$ mol of TIBA

(triisobutylaluminum) and 200 ml (80 g as macro monomer) of the above macro monomer solution were fed to the autoclave, and the mixture was stirred for 10 minutes at 25°C. Subsequently, 25 × $10^{-3}$ mol as reduced to Aluminum atom of MAO and 5 × $10^{-6}$ mol of heptane slurry made from rac-dimethylsilylenebis(2-methyl-4-phenyl-indenyl)zirconium dichloride [rac-$Me_2Si(2\text{-}Me\text{-}4\text{-}Ph\text{-}Ind)_2ZrCl_2$] were fed to the autoclave, and propylene was continuously fed to the autoclave at 25°C such that the total pressure was controlled to 0.5 MPa G, to thereby perform polymerization for 120 minutes.

After completion of reaction, unreacted propylene was thoroughly removed by releasing pressurization, and the catalyst components were deactivated with a small amount of methanol. The reaction mixture was filtrated, and after the addition of 4 liter of heptane having a temperature of 50°C, was washed with stirring for 10 minutes, and then, the mixture was filtrated. The set of washing with stirring and filtration was performed three times. Thereafter, the solid matter was dried under air and then in vacuum at 80°C for four hours, to thereby yield 527 g of a polyolefin copolymer.

The polyolefin copolymer was subjected to temperature rising elution fractionation chromatography, and a fraction eluted at 101°C or higher was analyzed through $^{13}$C-NMR. In the $^{13}$C-NMR spectrum, peaks attributed to ethylene chains were observed. The triple chain peaks satisfied the following equation: EP*E×PE*E/(PP*E×PE*P) = 6.52.

Evaluation results of physical properties of the obtained polyolefin copolymer are as follows:

| | |
|---|---|
| Ethylene content | 5.7 mol% |
| Wt. av. molecular weight (Mw) | 1,090,000 |
| Molecular weight distribution (Mw/Mn) | 3.97 |
| Intrinsic viscosity [η] | 6.44 dl/g |
| Melting point (Tm) | 149.2°C |

<Evaluation of physical properties of a blend>

To a mixture of propylene block copolymer (J763HP, available from Idemitsu Petrochemical Co., Ltd.) in an amount of 2,940 g and the polyolefin copolymer produced in Example 1 in an amount of 60 g, Irgaphos 168 (available from Ciba Specialty Chemicals K. K.) in an amount of 1,000 ppm and Irganox 1010 (available from Ciba Specialty Chemicals K. K.) in an amount of 1,000 ppm were added as additives. The resultant mixture was melt-kneaded by means a kneader, to thereby produce polymer pellets. The pellets were injection-molded by means of an injection molding machine, to thereby prepare test pieces which were evaluated in terms of physical properties. Evaluation results of physical properties of the injection-molded products are shown in Table 3.

[Example 6]

The procedure of Example 1 was repeated, except that a blend similar to that of Example 5 was prepared from the propylene block copolymer (2,850 g) and the polyolefin copolymer (150 g), to thereby yield injection-molded products. The results are shown in Table 3.

[Comparative Example 2]

The procedure of Example 3 was repeated, except that a blend similar to that of Example 5 was prepared without using the polyolefin copolymer, to thereby yield injection-molded products. The results are shown in Table 3.

Table 3

| | Example 5 | Example 6 | Comparative Example 2 |
|---|---|---|---|
| (Propylene polymer compositions) | | | |
| Propylene block copolymer (A) | J763HP | J763HP | J763HP |
| Amount of (A) used (g) | 2,940 | 2,850 | 2,940 |
| Amount of (B) used (g) | 60 | 150 | - |
| (Injection-molded products) | | | |
| Tensile modulus (MPa) | 1,213 | 1,242 | 1,102 |
| Izod impact strength ($kJ/m^2$) | 24.2 | 48.2 | 15.2 |

The results indicate that molded products formed from the propylene polymer compositions of Examples 5 and 6 containing the polyolefin copolymer of the present invention exhibit improved tensile modulus and Izod impact strength as compared with the molded product of Comparative Example 2.

Industrial Applicability

The propylene polymer composition of the present invention, having excellent impact resistance and elongation at break as well as high rigidity, is remarkably advantageous for use as industrial resin.

The polyolefin copolymer of the present invention is employed as a modifier for a propylene block copolymer and a composition formed of a propylene polymer and a rubber ingredient. Thus, molded products of propylene polymer containing the modifier find remarkable utility in various fields; e.g., injection-molded products requiring excellent physical properties such as impact strength and elongation at break while high rigidity is maintained (e.g., exterior materials for household electric appliances and automobiles) and materials having excellent moldability, particularly for large-scale blow molding or extrusion-expansion molding while the above physical properties are maintained.

## Claims

1. A propylene polymer composition comprising a component (A) which is either a propylene block copolymer or a composition containing a propylene polymer and a rubber ingredient; and a component (B) which is a polyolefin copolymer that contains a fraction eluting at 101°C or higher through temperature rising elution fractionation chromatography, the fraction exhibiting a $^{13}$C-NMR peak attributed to an ethylene chain, the polyolefin copolymer having an intrinsic viscosity falling within a range of 0.5 to 10.0 deciliter/g as measured at 135°C in decalin.

2. A propylene polymer composition according to claim 1, wherein the polyolefin copolymer as component (B) contains a fraction eluting at 101°C or higher through temperature rising elution fractionation chromatography, the fraction exhibiting triple chain peaks as measured through $^{13}$C-NMR within a range of 24 to 34 ppm, the peaks satisfying the following equation:

$$EP^*E \times PE^*E/(PP^*E \times PE^*P) > 0.01$$

wherein EP*E, PE*E, PP*E, and PE*P represent peak intensities attributed to the corresponding triple chains formed of ethylene (E) and propylene (P), and "*" represents a monomer containing a carbon atom to be measured.

3. A propylene polymer composition according to claim 1 or claim 2, wherein the polyolefin copolymer as component (B) contains a copolymer in which an ethylene copolymer segment and a propylene polymer segment are chemically linked.

4. A propylene polymer composition according claim 3, wherein the ethylene copolymer segment contained in the polyolefin copolymer as component (B) has a peak-top molecular weight, as measured through GPC, of higher than 7,000.

5. A propylene polymer composition according to claim 3 or claim 4, wherein the ethylene copolymer segment contained in the polyolefin copolymer as component (B) is a copolymer formed from ethylene and a C3 to C20 α-olefin.

6. A propylene polymer composition according to any of claims 3 to 5, wherein the ethylene copolymer segment contained in the polyolefin copolymer as component (B) contains a unit originating from ethylene chains in an amount of exceeding 50 mol% and less than 90 mol%.

7. A propylene polymer composition according to any of claims 3 to 6, wherein the polyolefin copolymer as component (B) has a melting point higher than 130°C.

8. A molded product formed of a propylene polymer composition as recited in any of claims 1 to 7.

9. A polyolefin copolymer in which a propylene polymer segment and an ethylene copolymer segment are chemically linked, **characterized in that** (a) the polyolefin copolymer contains a fraction eluting at 101°C or higher through temperature rising elution fractionation chromatography, the fraction exhibiting a $^{13}$C-NMR peak attributed to an

ethylene chain; **in that** (b) the polyolefin copolymer has an intrinsic viscosity falling within a range of 0.5 to 10.0 deciliter/g as measured at 135°C in decalin; and **in that** (c) the ethylene copolymer segment has a peak-top molecular weight, as measured through GPC, of higher than 7,000.

**10.** A polyolefin copolymer according to claim 9, wherein the ethylene copolymer segment is a copolymer formed from ethylene and a C3 to C20 $\alpha$-olefin.

**11.** A polyolefin copolymer according to claim 9 or claim 10, wherein the ethylene copolymer segment contains a unit originating from ethylene chains in an amount exceeding 50 mol% and less than 90 mol%.

**12.** A polyolefin copolymer according to any of claims 9 to 11, which has a melting point higher than the temperature of 130°C.

## Patentansprüche

**1.** Propylenpolymer-Zusammensetzung, enthaltend einen Bestandteil (A), der entweder ein Propylenblockcopolymer oder eine Zusammensetzung ist, die einen Propylenpolymer- und einen Gummibestandteil enthält; und einen Bestandteil (B), der ein Polyolefincopolymer ist, das eine Fraktion enthält, die bei 101°C oder höher durch temperaturerhöhende, fraktionierte Elutionschromatographie eluiert wird, wobei die Fraktion einen einer Ethylenkette zugeordneten $^{13}$C-NMR-Peak zeigt und das Polyolefincopolymer eine in einem Bereich von 0,5 to 10,0 Deziliter/g liegende intrinsische Viskosität zeigt, gemessen bei 135°C in Decalin.

**2.** Propylenpolymer-Zusammensetzung gemäß Anspruch 1, in der das Polyolefincopolymer als Bestandteil (B) eine Fraktion enthält, die bei 101°C oder höher durch temperaturerhöhende, fraktionierte Elutionschromatographie eluiert wird, wobei die Fraktion durch $^{13}$C-NMR gemessene Dreierketten-Peaks in einem Bereich von 24 bis 34 ppm zeigt, wobei die Dreierketten-Peaks die folgende Relation erfüllen:

$$EP^*E \times PE^*E/(PP^*E \times PE^*P)>0,01$$

in der EP*E, PE*E, PP*E und PE*P den Peakintensitäten entsprechen, die von den entsprechenden aus Ethylen (E) und Propylen (P) gebildeten Dreierketten zugeordnet werden, und "*" ein Monomer darstellt, welches ein zu messendes Kohlenstoffatom enthält.

**3.** Propylenpolymer-Zusammensetzung gemäß Anspruch 1 oder 2, in der das Polyolefincopolymer als Bestandteil (B) ein Copolymer enthält, in dem ein Ethylencopolymersegment und ein Propylenpolymersegment chemisch gebunden sind.

**4.** Propylenpolymer-Zusammensetzung gemäß Anspruch 3, in der das Ethylencopolymersegment, das in dem Polyolefincopolymer als Bestandteil (B) enthalten ist, ein mittels GPC gemessenes Peakspitzen-Molekulargewicht von mehr als 7.000 aufweist.

**5.** Propylenpolymer-Zusammensetzung gemäß Anspruch 3 oder 4, wobei das Ethylencopolymersegment, das in dem Polyolefincopolymer als Bestandteil (B) enthalten ist, ein aus Ethylen und einem C3 bis C20 $\alpha$-Olefin gebildetes Copolymer ist.

**6.** Propylenpolymer-Zusammensetzung gemäß einem der Ansprüche 3 bis 5, wobei das Ethylencopolymersegment, das in dem Polyolefincopolymer als Bestandteil (B) enthalten ist, eine von Ethylenketten abstammenden Einheit in einer Menge von mehr als 50 mol-% und weniger als 90 mol-% enthält.

**7.** Propylenpolymer-Zusammensetzung gemäß einem der vorgenannten Ansprüche 3 bis 6, wobei das Polyolefincopolymer als Bestandteil (B) einen Schmelzpunkt über 130°C aufweist.

**8.** Formteil, das aus einer Propylenpolymer-Zusammensetzung, wie in einem der Ansprüche 1 bis 7 angegeben, gebildet ist.

**9.** Polyolefincopolymer, in dem ein Propylenpolymersegment und ein Ethylencopolymersegment chemisch gebunden

sind, **dadurch gekennzeichnet, dass** (a) das Polyolefincopolymer eine Fraktion enthält, die bei 101°C oder höher durch temperaturerhöhende, fraktionierte Elutionschromatographie eluiert wird, wobei die Fraktion einen einer Ethylenkette zugeordneten $^{13}C$-NMR-Peak zeigt; dass (b) das Polyolefincopolymer eine in einem Bereich von 0,5 to 10,0 Deziliter/g liegende intrinsische Viskosität zeigt, gemessen bei 135°C in Decalin ; und dass (c) das Ethylencopolymersegment ein mittels GPC gemessenes Peakspitzen-Molekulargewicht von mehr als 7.000 aufweist.

**10.** Polyolefincopolymer gemäß Anspruch 9, wobei das Ethylencopolymersegment ein aus Ethylen und einem C3 bis C20 $\alpha$-Olefin gebildetes Copolymer ist.

**11.** Polyolefincopolymer gemäß Anspruch 9 oder 10, wobei das Ethylencopolymersegment eine von Ethylenketten abstammende Einheit in einer Menge von mehr als 50 mol-% und weniger als 90 mol-% enthält.

**12.** Polyolefincopolymer gemäß einem der Ansprüche 9 bis 11, welches einen Schmelzpunkt höher als die Temperatur von 130°C hat.

## Revendications

**1.** Composition de polymère de propylène comprenant un composant (A) qui est soit un copolymère séquencé de propylène soit une composition contenant un polymère de propylène et un ingrédient de caoutchouc ; et un composant (B) qui est un copolymère de polyoléfine qui contient une fraction s'éluant à 101°C ou plus par chromatographie d'élution à fractionnement par élévation de température, la fraction présentant un pic de RMN $^{13}C$ attribué à une chaîne éthylénique, le copolymère de polyoléfine présentant une viscosité intrinsèque, mesurée à 135°C dans de la décaline, dans une gamme allant de 0,5 à 10,0 dL/g.

**2.** Composition de polymère de propylène selon la revendication 1, dans laquelle le copolymère de polyoléfine en tant que composant (B) contient une fraction s'éluant à 101°C ou plus par chromatographie d'élution à fractionnement par élévation de température, la fraction présentant des pics de triples chaînes, mesurés par RMN $^{13}C$, dans une gamme allant de 24 à 34 ppm, les pics satisfaisant l'équation suivante :

$$EP{*}E \times PE{*}E / (PP{*}E \times PE{*}P) > 0{,}01$$

dans laquelle EP*E, PE*E, PP*E et PE*P représentent l'intensité des pics attribués aux triples chaînes correspondantes formées d'éthylène (E) et de propylène (P), et "*" représente un monomère contenant un atome de carbone à mesurer.

**3.** Composition de polymère de propylène selon la revendication 1 ou 2, dans laquelle le copolymère de polyoléfine en tant que composant (B) contient un copolymère dans lequel un segment de copolymère d'éthylène et un segment de polymère de propylène sont chimiquement liés.

**4.** Composition de polymère de propylène selon la revendication 3, dans laquelle le segment de copolymère d'éthylène présent dans le copolymère de polyoléfine en tant que composant (B) présente une masse moléculaire maximale, mesurée par CPG, supérieure à 7 000.

**5.** Composition de polymère de propylène selon la revendication 3 ou 4, dans laquelle le segment de copolymère d'éthylène présent dans le copolymère de polyoléfine en tant que composant (B) est un copolymère formé d'éthylène et d'une $\alpha$-oléfine en $C_3$ à $C_{20}$.

**6.** Composition de polymère de propylène selon l'une quelconque des revendications 3 à 5, dans laquelle le segment de copolymère d'éthylène présent dans le copolymère de polyoléfine en tant que composant (B) contient un motif provenant de chaînes éthyléniques dans une quantité supérieure à 50% en moles et inférieure à 90% en moles.

**7.** Composition de polymère de propylène selon l'une quelconque des revendications 3 à 6, dans laquelle le copolymère de polyoléfine en tant que composant (B) présente un point de fusion supérieur à 130°C.

**8.** Produit moulé formé d'une composition de polymère de propylène telle que décrite dans l'une quelconque des revendications 1 à 7.

**9.** Copolymère de polyoléfine dans lequel un segment de polymère de propylène et un segment de copolymère d'éthylène sont chimiquement liés, **caractérisé en ce que** (a) le copolymère de polyoléfine contient une fraction s'éluant à 101°C ou plus par chromatographie d'élution à fractionnement par élévation de température, la fraction présentant un pic de RMN $^{13}C$ attribué à une chaîne éthylénique ; **en ce que** (b) le copolymère de polyoléfine présente une viscosité intrinsèque, mesurée à 135°C dans de la décaline, dans une gamme allant de 0,5 à 10,0 dL/g ; et **en ce que** (c) le segment de copolymère d'éthylène présente une masse moléculaire maximale, mesurée par CPG, supérieure à 7 000.

**10.** Copolymère de polyoléfine selon la revendication 9, dans lequel le segment de copolymère d'éthylène est un copolymère formé d'éthylène et d'une $\alpha$-oléfine en $C_3$ à $C_{20}$.

**11.** Copolymère de polyoléfine selon la revendication 9 ou 10, dans lequel le segment de copolymère d'éthylène contient un motif provenant de chaînes éthyléniques dans une quantité supérieure à 50% en moles et inférieure à 90% en moles.

**12.** Copolymère de polyoléfine selon l'une quelconque des revendications 9 à 11, qui présente un point de fusion supérieur à la température de 130°C.